# EUROPÄISCHE PATENTSCHRIFT

(11) **EP 4 237 298 B1**
(45) Veröffentlichungstag und Bekanntmachung des Hinweises auf die Patenterteilung: **07.08.2024**
(21) Anmeldenummer: 21801915.6
(22) Anmeldetag: 29.10.2021
(51) Int. Cl.: B60T 13/26, B60T 13/68

(54) **ELEKTROPNEUMATISCHE EINRICHTUNG MIT EINER SCHUTZVENTILEINHEIT**
ELECTROPNEUMATIC DEVICE WITH A PROTECTIVE VALVE UNIT
DISPOSITIF ÉLECTROPNEUMATIQUE POURVU D'UNE UNITÉ DE VALVE DE PROTECTION

(30) Priorität: 02.11.2020 DE 102020128746
(43) Veröffentlichungstag der Anmeldung: 06.09.2023
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2021/080072
(87) Internationale Veröffentlichungsnummer: WO 2022/090437

(56) Entgegenhaltungen:
- EP-A2- 2 133 249
- DE-A1- 102007 016 335

## Beschreibung

Die Erfindung betrifft eine elektropneumatische Einrichtung für ein elektronisch steuerbares pneumatisches Bremssystem, umfassend einen Druckluftvorrat zum Bereitstellen eines Vorratsdrucks, einen elektropneumatischen Bremsdruckmodulator, der Vorratsdruck von dem Druckluftvorrat empfängt und in Abhängigkeit von elektronischen Bremsanforderungssignalen einen Bremsdruck an einem Bremsdruckanschluss aussteuert, sowie einen Bremsaktuator, der den Bremsdruck empfängt. Die Erfindung betrifft ferner ein Verfahren sowie ein Nutzfahrzeug.

In pneumatischen Bremssystemen wird in der Regel von einem Bremsdruckmodulator Bremsaktuatoren ein Bremsdruck zugeführt um ein Fahrzeug zu verzögern oder zu stoppen. Ein solcher Bremsdruckmodulator kann beispielsweise ein Vorderachsmodulator, Hinterachsmodulator, Zusatzachsmodulator, Parkbremsmodulator, Anhängerbremsdruckmodulator bzw. Anhängersteuerventil oder dergleichen sein. Als Bremsaktuatoren können beispielsweise übliche Betriebsbremsaktuatoren, Federspeicherbremszylinder oder sogenannte Kombizylinder, die einen Betriebsbremsteil und einen Federspeicherteil aufweisen, zum Einsatz kommen. Im Unterschied zu Betriebsbremsen, die bei Anliegen eines Bremsdrucks zuspannen, werden Federspeicheraktuatoren durch Anlegen eines Bremsdrucks gelöst und spannen bei Wegfall des Bremsdrucks aufgrund der Federkraft zu.

Ein Leck in Bremsdruckleitungen ist in allen Fällen unerwünscht. Tritt bei Betriebsbremsen ein Leck in der Bremsdruckleitung auf, hat das zur Folge, dass der bereitgestellte Bremsdruck in die Umgebung entweicht und das entsprechende Rad nicht oder nicht mehr vollständig gebremst werden kann. Als Maßnahme wird dann entweder die entsprechende Achse nicht mehr gebremst und das Fahrzeug über die weiteren Achsen verzögert, oder die Bremsung dieser Achse wird über andere Aktuatoren redundant umgesetzt, wie beispielsweise Federspeicherteile von Kombizylindern. Bei einem Leck einer Druckluftleitung zu einem Federspeicherbremszylinder wird der Federspeicherbremszylinder hingegen entlüftet und damit die Feststellbremse eingelegt. Aufgrund dieses Lecks kann jedoch der Federspeicherbremszylinder nicht mehr belüftet und daher die Feststellbremse nicht mehr gelöst werden. Das Fahrzeug lässt sich in diesem Zustand, das heißt bei eingelegter Feststellbremse, nicht mehr bewegen oder abschleppen.

Um dies zu verhindern, ist beispielsweise aus DE 10 2007 016 335 A1 bekannt, die Federspeicherbremszylinder in diesem Fall über einen zweiten Bremskreis zu lösen, der aus einem zweiten Druckluftvorrat gespeist wird. Der zweite Bremskreis wird dann über ein elektromagnetisch schaltbares 3/2-Wegeventil und ein Wechselventil mit dem entsprechenden Federspeicherbremszylinder verbunden, um diesen dann bei Ausfall des ersten Bremskreises, beispielsweise aufgrund der Leckage oder des Leitungsbruchs, lösen zu können. Nachteilig ist hieran der Verbau des zusätzlichen elektromagnetischen Ventils, und auch ein redundantes dynamisches Bremsen mittels des zusätzlichen elektromagnetischen Ventils ist nur bedingt möglich. Eine ähnliche Lösung ist aus EP 3 356 192 A1 bekannt.

Die EP2133249A2 betrifft ein Steuergerät und ein Verfahren zur Steuerung einer Notlöseeinrichtung einer elektrischen Feststellbremse eines Fahrzeugs, wobei die elektrische Feststellbremse und die Notlöseeinrichtung überein Wechselventil an zumindest einen Federspeicherbremszylinder gekoppelt sind und die Notlöseeinrichtung ein Notlöseventil und das Steuergerät umfasst. Ferner ist in der EP2133249A2 vorgesehen, dass das Steuergerät in einer Weise ausgebildet ist, dass die elektrische Feststellbremse über die Notlöseeinrichtung belüftet wird, wenn die Geschwindigkeit des Fahrzeugs größer als ein vorgegebener Wert ist und das Einfallen der elektrischen Feststellbremse detektiert wird.

Im Bereich der Bremsen für schienengebundene Züge und Lokomotiven ist es bekannt, zum Bremsen verschiedener Achsen ein Schlauchbruchsicherungsventil einzusetzen, wie es in DE 1 282 392 beschrieben ist. Der Abriss des Schlauchs einer Achse führt dann nicht dazu, dass die andere Achse nicht mehr gebremst werden könnte. Vielmehr wird die Achse mit gebrochenem Schlauch nicht mehr mit Druckluft versorgt. Allerdings ist dieser Aufbau sehr komplex und benötigt größere Volumina. Zudem besteht hier ein Problem in der komplizierten Abstimmung der Drosseln aufgrund des asymmetrischen Luftverbrauchs. Diese Lösung eignet sich daher nicht für den Einsatz in Nutzfahrzeugen, in denen eine radgerechte Bremsung erforderlich ist, um die Stabilität des Fahrzeugs aufrecht zu erhalten.

Aufgabe der vorliegenden Erfindung ist es, eine elektropneumatische Einrichtung der vorstehend genannten Art bereitzustellen, die sowohl ein sicheres Bremsen der Achse auch bei Leckage einer Bremsdruckleitung oder Leitungsbruch ermöglicht, als auch das sichere und einfache Lösen von Federspeicherbremszylindern bei Leckage oder Bruch einer Bremsdruckleitung. Insbesondere soll sich die elektropneumatische Einrichtung der vorliegenden Erfindung für den Einsatz in autonomen oder semiautonomen Fahrzeugen eignen, bei denen das manuelle Eingreifen eines Fahrers nicht möglich ist.

Die Erfindung löst die Aufgabe bei einer elektropneumatischen Einrichtung der eingangs genannten Art in einem ersten Aspekt dadurch, dass eine Schutzventileinheit vorgesehen ist, mit einem Schutzventileinlass, einem ersten Schutzventilauslass und einem zweiten Schutzventilauslass, wobei der Schutzventileinlass mit dem Bremsdruckanschluss des Bremsdruckmodulators verbunden ist, den Bremsdruck empfängt und diesen an den ersten und zweiten Schutzventilauslässen bereitstellt, sowie einer ersten Bremsdruckleitung, die mit dem ersten Schutzventilauslass verbunden ist und einer zweiten Bremsdruckleitung, die mit dem zweiten Schutzventilauslass verbunden ist, wobei die ersten und zweiten Bremsdruckleitungen mit dem Bremsdruckaktuator verbunden sind. Ferner ist die Schutzventileinheit dazu eingerichtet, bei einer Leckage der ersten Bremsdruckleitung die Bremsdruckaussteuerung am ersten Schutzventilauslass zu drosseln oder zu verhindern und bei einer Leckage der zweiten Bremsdruckleitung die Bremsdruckaussteuerung am zweiten Schutzventilauslass zu drosseln oder zu verhindern. Die ersten und zweiten Bremsdruckleitungen verbinden also redundant den Bremsdruckmodulator mit dem Bremsdruckaktuator. Auf diese Weise kann der Bremsdruckaktuator noch mit Bremsdruck versorgt werden, wenn eine der ersten und zweiten Bremsdruckleitungen ein Leck hat, oder gebrochen ist. Die Schutzventileinheit dient einerseits dazu, den Bremsdruck in die ersten und zweiten Bremsdruckleitungen auszusteuern. Es kann beispielsweise vorgesehen sein, dass im Normalbetrieb lediglich die erste Bremsdruckleitung verwendet wird und erst, wenn diese bricht oder ein Leck hat, die zweite Bremsdruckleitung zu nutzen. Es kann aber auch vorgesehen sein, dass im Normalbetrieb der Bremsdruck im Wesentlichen gleichmäßig über die beiden Bremsdruckleitungen bereitgestellt wird. Ferner dient die Schutzventileinheit dazu, die gebrochene oder leckende Leitung zu drosseln oder abzusperren. Auf diese Weise wird verhindert, dass einerseits der Vorrat leerlaufen kann, andererseits eine Bremsung nicht mehr möglich ist bzw. die Federspeicherbremszylinder zugespannt sind und nicht geöffnet werden können.

Dies ist insbesondere bei autonomen oder semiautonomen Fahrzeugen vorteilhaft. Die Erfinder haben erkannt, dass es für den Betrieb von autonomen oder semiautonomen Fahrzeugen besonderer Einrichtungen bedarf, um fehlertolerante Systeme umzusetzen, die insbesondere ohne Eingreifen von Menschen auskommen können. Mit der vorliegenden Erfindung wurde eine pneumatische Einrichtung geschaffen, die diese Aufgabe erfüllt.

In einer ersten bevorzugten Ausführungsform ist ferner ein Wechselventil vorgesehen, welches einerseits mit den ersten und zweiten Bremsdruckleitungen und andererseits mit dem Bremsdruckaktuator verbunden ist. Ein solches Wechselventil ist vorzugsweise als Select-High-Ventil ausgebildet und weist vorzugsweise einen ersten Wechselventilanschluss, einen zweiten Wechselventilanschluss und einen dritten Wechselventilanschluss auf. Der dritte Wechselventilanschluss ist mit dem Bremsdruckaktuator verbunden. Der erste Wechselventilanschluss ist vorzugsweise mit der ersten Bremsdruckleitung und der zweite Wechselventilanschluss mit der zweiten Bremsdruckleitung verbunden. Das Wechselventil ist vorzugsweise so ausgebildet, dass es jeweils den höheren des am ersten und zweiten Wechselventilanschluss anliegenden Drucks an den dritten Wechselventilanschluss aussteuert. Der jeweils andere Wechselventilanschluss wird dann vorzugsweise abgeschlossen. Das Wechselventil kann direkt an dem Bremsdruckaktuator angeordnet oder in diesen integriert sein.

Weiter ist bevorzugt, dass die Schutzventileinheit direkt an dem Bremsdruckmodulator angeordnet oder mit diesem integriert ist. Hierdurch wird eine robuste Einheit geschaffen und weitere potentielle Fehlerquellen zwischen dem Bremsdruckmodulator und der Schutzventileinheit vermieden.

Ferner kann vorgesehen sein, dass die elektropneumatische Einrichtung einen zweiten Bremsaktuator aufweist, der mit der ersten und zweiten Bremsdruckleitung zum Empfangen des Bremsdrucks verbunden ist. Vorzugsweise ist auch zwischen dem zweiten Bremsdruckaktuator und den ersten und zweiten Bremsdruckleitungen ein zweites Wechselventil angeordnet. Das zweite Wechselventil kann vorzugsweise wie das vorstehend beschriebene Wechselventil ausgebildet und angeordnet sein. Auf diese Weise können mit dem Bremsdruckmodulator und der Schutzventileinheit zwei Bremsdruckaktuatoren versorgt werden, insbesondere dann, wenn der Bremsdruckaktuator einkanalig ausgebildet ist. Es können darüber hinaus aber auch weitere Bremsdruckaktuatoren, wie drei, vier, fünf oder sechs mittels der Schutzventileinheit angesteuert werden. Es kann auch vorgesehen sein, dass die Schutzventileinheit an sich mehrkanalig ausgebildet ist. Auch ein mehrkanaliger Bremsdruckmodulator kann mit nur einer Schutzventileinheit ausgestattet sein, die dann in diesem Fall ein- oder mehrkanalig ausgebildet sein kann.

In einer bevorzugten Weiterbildung ist vorgesehen, dass der Bremsdruckmodulator mit einem zweiten Druckluftvorrat verbunden ist und der zweite Druckluftvorrat einen zweiten Vorratsdruck an dem Bremsdruckmodulator bereitstellt. Hierdurch wird eine weitere Redundanz geschaffen. Zwischen den ersten und zweiten Druckluftvorräten sowie dem Bremsdruckmodulator ist wiederum vorzugsweise ein Wechselventil angeordnet, sodass jeweils der höhere des ersten und zweiten Vorratsdrucks aus den ersten und zweiten Druckluftvorräten dem Bremsdruckmodulator bereitgestellt wird.

Vorzugsweise weist die elektropneumatische Einrichtung eine erste Diagnoseeinheit zum Ermitteln einer Leckage der ersten Bremsdruckleitung und eine zweite Diagnoseeinheit zum Ermitteln einer Leckage der zweiten Bremsdruckleitung auf, wobei die ersten und zweiten Diagnoseeinheiten mit derselben elektronischen Steuereinheit verbunden sind. Bevorzugt ist weiterhin ein erster Drucksensor zum Ermitteln des Bremsdrucks in der ersten Bremsdruckleitung und ein zweiter Drucksensor zum Ermitteln des Bremsdrucks in der zweiten Bremsdruckleitung vorgesehen, wobei die ersten und zweiten Drucksensoren vorzugsweise mit derselben elektronischen Steuereinheit verbunden sind. Die ersten und zweiten Drucksensoren können den ersten und zweiten Diagnoseeinheiten zugeordnet oder Teil von diesen sein. Beispielsweise sind die ersten und zweiten Diagnoseeinheiten bzw. Drucksensoren mit einer Zentraleinheit des Bremssystems, in dem die elektropneumatische Einrichtung gemäß der vorliegenden Erfindung ausgebildet ist, verbunden sein oder die ersten und zweiten Diagnoseeinheiten bzw. Drucksensoren stellen ihr Signal über einen Fahrzeugbus oder ein anderes Bussystem bereit, oder die ersten und zweiten Diagnoseeinheiten bzw. Drucksensoren sind mit einer elektronischen Steuereinheit des Bremsdruckmodulators verbunden. Hierdurch wird eine frühzeitige Erkennung von Fehlern ermöglicht, was insbesondere bei einem hochautomatisierten und/oder fahrerlosen Fahrzeug vorteilhaft ist, bei dem Leckagen oder Leitungsbrüche nicht über die Sinne des menschlichen Fahrers erfasst werden können. Alternativ oder zusätzlich zu den ersten und zweiten Drucksensoren können auch zusätzliche Ventile vorgesehen sein, über die ebenfalls eine derartige Diagnose ausgeführt werden kann.

In einer weiteren bevorzugten Ausführungsform ist vorgesehen, dass eine Bremsaktuator-Schutzeinheit einerseits mit den ersten und zweiten Bremsdruckleitungen und andererseits mit dem Bremsdruckaktuator verbunden ist. Eine derartige Bremsaktuator-Schutzeinheit ist vorzugsweise anstelle des oben beschriebenen Wechselventils zwischen den Bremsdruckleitungen und dem Bremsaktuator geschaltet. Die Bremsaktuator-Schutzeinheit kann identisch oder analog zur Schutzventileinheit aufgebaut sein. Auf diese Weise können sich Gleichteilvorteile ergeben, die dann in dem Bremssystem umgesetzt werden können.

In einer ersten konkreten Umsetzung der Schutzventileinheit weist diese einen Ventilkörper auf, der den Schutzventileinlass, den ersten Schutzventilauslass und den zweiten Schutzventilauslass sowie eine Arbeitskammer aufweist, in der ein Ventilelement beweglich zwischen dem ersten und dem zweiten Schutzventilauslass angeordnet ist. Das Ventilelement ist vorzugsweise in einer ersten Endlage gegen einen ersten dem ersten Schutzventilauslass zugeordneten Ventilsitz anliegend, und liegt in einer zweiten Endlage gegen einen zweiten dem zweiten Schutzventilauslass zugeordneten Ventilsitz an. Vorzugsweise weist die Schutzventileinheit ferner einen ersten gedrosselten Bypass auf, der den Schutzventileinlass mit dem ersten Schutzventilauslass verbindet, sowie einen zweiten gedrosselten Bypass, der den Schutzventileinlass mit dem zweiten Schutzventilauslass verbindet. Wenn also beispielsweise am ersten Schutzventilauslass der Druck abfällt, weil die erste Bremsdruckleitung gebrochen ist, ergibt sich ein Druckunterschied vom ersten zum zweiten Schutzventilanschluss, das Ventilelement in Richtung des ersten Ventilsitzes gedrückt wird, sodass der erste Schutzventilauslass abgesperrt werden kann. Druckluft kann dann zwar noch über den gedrosselten Bypass in Richtung der ersten Bremsdruckleitung strömen, dies ist aber ein kleiner Volumenstrom, der die Bremsleistung kaum beeinträchtigt. Andererseits können die ersten und zweiten Bypässe im Normalbetrieb dazu dienen, das Ventilelement im Wesentlichen in der Mitte der Arbeitskammer zu halten, um eine gleichmäßige Ausnutzung der ersten und zweiten Bremsdruckleitung zu ermöglichen bzw. um das Ventilelement wieder in die Mitte zu bringen, wenn es diese verlassen hat. Alternativ oder zusätzlich zu den Bypässen kann auch eine oder mehrere Federn vorgesehen sein, die das Ventilelement in die Mitte, also eine Neutralposition, belasten.

Weiterhin ist es auch möglich, dass die Schutzventileinheit ein erstes pneumatisch schaltbares Ventil und ein zweites pneumatisch schaltbares Ventil aufweist. Das erste pneumatisch schaltbare Ventil ist vorzugsweise der ersten Bremsdruckleitung zugeordnet und das zweite pneumatisch schaltbare Ventil ist vorzugsweise der zweiten Bremsdruckleitung zugeordnet. Die ersten und zweiten pneumatisch schaltbaren Ventile sind vorzugsweise so ausgelegt, dass das erste pneumatisch schaltbare Ventil bei einer Leckage der ersten Bremsdruckleitung die Bremsdruckaussteuerung am ersten Schutzventilausgang drosselt oder sperrt, und das zweite pneumatisch schaltbare Ventil bei einer Leckage der zweiten Bremsdruckleitung die Bremsdruckaussteuerung am zweiten Schutzventilausgang drosselt oder sperrt. Auf diese Weise kann dieselbe Funktionalität wie oben beschrieben umgesetzt werden, wobei die ersten und zweiten pneumatisch schaltbaren Ventile eine hohe Ausfallsicherheit haben sowie große Querschnitte und eine einfache Diagnose zulassen.

Vorzugsweise weist das erste pneumatisch schaltbare Ventil eine erste Schaltstellung, eine zweite Schaltstellung, einen ersten Steueranschluss und einen zweiten Steueranschluss auf, wobei das erste pneumatisch schaltbare Ventil bei Aussteuern eines ersten Steuerdrucks am ersten Steueranschluss in die erste Schaltstellung belastet oder geschaltet wird und bei Aussteuern eines zweiten Steuerdrucks am zweiten Steueranschluss in die zweite Schaltstellung belastet oder geschaltet wird. Es kann auch vorgesehen sein, dass das erste pneumatisch schaltbare Ventil nicht nur zwei definierte Endlagen aufweist, sondern auch Zwischenstellungen zwischen den ersten und zweiten Schaltstellungen zulässt. Ebenso weist vorzugsweise das zweite pneumatisch schaltbare Ventil eine dritte Schaltstellung, eine vierte Schaltstellung, einen dritten Steueranschluss und einen vierten Steueranschluss auf. Bei Aussteuern eines dritten Steuerdrucks am dritten Steueranschluss wird das zweite pneumatisch schaltbare Ventil dann vorzugsweise in die dritte Schaltstellung belastet oder geschaltet und bei Aussteuern eines vierten Steuerdrucks am vierten Steueranschluss in die zweite Schaltstellung belastet oder geschaltet. Auch das zweite pneumatisch schaltbare Ventil kann Zwischenstellungen aufweisen. Im fehlerfreien Normalbetrieb werden jeweils der erste und zweite Steuerdruck sowie der dritte und vierte Steuerdruck im Wesentlichen gleichzeitig ausgesteuert, sodass sich eine symmetrische Belastung der ersten und zweiten pneumatisch schaltbaren Ventile ergibt. Erst bei einer Leckage oder einem Bruch der Leitung kommt es zu einer Asymmetrie, die dann ein Schalten des entsprechenden Ventils zur Folge hat.

Vorzugsweise ist in der ersten bzw. dritten Schaltstellung der ersten und zweiten pneumatisch schaltbaren Ventile jeweils der Schutzventileinlass ungedrosselt mit dem ersten bzw. zweiten Schutzventilauslass verbunden. In der zweiten Schaltstellung bzw. der vierten Schaltstellung der ersten und zweiten pneumatisch schaltbaren Ventile ist der Schutzventileinlass vorzugsweise gedrosselt mit dem ersten bzw. zweiten Schutzventilauslass verbunden. Insofern ist bevorzugt in der zweiten bzw. vierten Schaltstellung der ersten bzw. zweiten pneumatisch schaltbaren Ventile eine Drossel vorzugsweise in das Ventil integriert.

Bevorzugt ist vorgesehen, dass der erste Steuerdruck dem ersten Bremsdruck aus der ersten Bremsdruckleitung oder einem von diesem abgeleiteten Druck entspricht. Ebenso entspricht vorzugsweise der dritte Steuerdruck dem zweiten Bremsdruck aus der zweiten Bremsdruckleitung oder einem von diesem abgeleiteten Druck. Insofern kann beispielsweise eine erste Steuerleitung von der ersten Bremsdruckleitung zum ersten Steueranschluss führen und eine dritte Steuerleitung von der zweiten Bremsdruckleitung zum dritten Steueranschluss. Diese Steuerleitungen können mit geringem Volumen ausgeführt sein.

Weiterhin ist vorzugsweise vorgesehen, dass der zweite Steuerdruck dem zweiten Bremsdruck in der zweiten Bremsdruckleitung oder einem von diesem abgeleiteten Druck entspricht. Der vierte Steuerdruck entspricht dann vorzugsweise dem ersten Bremsdruck in der ersten Bremsdruckleitung oder einem von diesem abgeleiteten Druck. Zu diesem Zweck kann eine zweite Steuerleitung von der zweiten Bremsdruckleitung zum zweiten Steueranschluss führen und eine vierte Steuerleitung von der ersten Bremsdruckleitung zum vierten Steueranschluss führen. Auch diese können wieder mit geringem Querschnitt ausgebildet sein. Alternativ oder zusätzlich kann auch vorgesehen sein, dass der zweite und vierte Steuerdruck einem an dem Schutzventileingang anliegenden oder von diesem abgeleiteten Druck entsprechen. Insofern kann auch eine vom Schutzventileingang abzweigende Steuerleitung zu jeweils dem zweiten und vierten Steueranschluss führen.

Vorzugsweise sind die ersten und zweiten pneumatisch schaltbaren Ventile in eine offene, nicht gedrosselte Schaltstellung federbelastet vorgespannt. Wenn die elektropneumatische Einrichtung korrekt funktioniert und beide Bremsdruckleitungen genutzt werden, um Bremsdruck von dem Bremsdruckmodulator zum Bremsaktuator zu bringen, sind auch alle Steuerleitungen in der zuvor beschriebenen Ausführungsform, das heißt die erste, zweite, dritte und vierte Steuerleitung bzw. alle Steueranschlüsse belüftet und zwar mit demselben Druck. Um dann die ersten und zweiten pneumatisch schaltbaren Ventile in die offene Position zu bringen oder zu halten, sind diese vorzugsweise in die offene Schaltstellung federbelastet vorgespannt. Alternativ könnte auch die Steuerleitung, die zu dem zweiten und vierten Steueranschluss führen, mit geringem Querschnitt ausgeführt sein, sodass der Druck weiter gedrosselt wird. Allerdings kann das dann auch dazu führen, dass die Dynamik des Systems verringert ist. In einer weiteren bevorzugten Ausführungsform ist zwischen dem Schutzventileingang und dem zweiten und/oder vierten Steueranschluss eine Drossel und/oder ein vergrößertes Steuervolumen angeordnet. Die Drossel dient dazu, nicht den unmittelbar am Schutzventileingang ausgesteuerten Druck an den zweiten und vierten Steueranschluss auszusteuern, sondern einen gedrosselten. Vorzugsweise ist ein vergrößertes Steuervolumen vorgesehen, und zwar stromabwärts der Drossel, um eine weitere Reduktion vorzusehen.

In einer Variante der Ausführung der elektropneumatischen Einrichtung ist der Bremsdruckmodulator ein Achsmodulator und der wenigstens eine Bremsaktuator ist ein Betriebsbremsaktuator. Beispielsweise ist der Bremsdruckmodulator als Vorderachsmodulator ausgebildet, insbesondere einkanaliger Vorderachsmodulator, wobei dann an die Schutzventileinheit insgesamt vier Bremsdruckleitungen angeschlossen sind, zwei, die zu einem linken Vorderachsbremsaktuator führen und zwei, die zu einem rechten Vorderachsbremsaktuator führen. Alternativ kann der Bremsdruckmodulator auch als Parkbremsmodulator ausgebildet sein und der Bremsaktuator ist ein Federspeicheraktuator. Auch hier können wiederum ein, zwei, drei, vier oder mehr Federspeicheraktuatoren an die Schutzventileinheit des Parkbremsmodulators angeschlossen werden. AIternativ kann auch für jeden Bremsaktuator eine separate Schutzventileinheit vorgesehen sein.

In einem zweiten Aspekt löst die Erfindung die eingangs genannte Aufgabe durch ein Verfahren zum rohrbruchsicheren Aussteuern eines Bremsdrucks in einem elektronisch steuerbaren pneumatischen Bremssystem mit den Schritten:
- Empfangen eines elektronischen Bremsanforderungssignals an einem elektropneumatischen Bremsdruckmodulator;
- Aussteuern eines Bremsdrucks mittels des Bremsdruckmodulators;
- Empfangen des Bremsdrucks an einer Schutzventileinheit;
- Aussteuern des Bremsdrucks mittels der Schutzventileinheit in eine erste Bremsdruckleitung und eine zweite Bremsdruckleitung, die einen Bremsaktuator redundant mit der Schutzventileinheit verbinden;
wobei die Schutzventileinheit bei Ermitteln einer Leckage der ersten Bremsdruckleitung die Aussteuerung des Bremsdrucks in die erste Bremsdruckleitung drosselt oder verhindert und bei Ermitteln einer Leckage der zweiten Bremsdruckleitung die Aussteuerung des Bremsdrucks in die zweite Bremsdruckleitung drosselt oder verhindert.

Es soll verstanden werden, dass die elektropneumatische Einrichtung gemäß dem ersten Aspekt der Erfindung sowie das Verfahren gemäß dem zweiten Aspekt der Erfindung gleiche und ähnliche Unteraspekte haben, wie sie insbesondere in den abhängigen Ansprüchen niedergelegt sind. Insofern wird vollumfänglich auf die obige Beschreibung zum ersten Aspekt der Erfindung verwiesen.

So ist es beispielsweise denkbar, dass das Verfahren ferner die Schritte aufweist: Ermitteln eines ersten Bremsdrucks in der ersten Bremsdruckleitung und Ermitteln eines zweiten Bremsdrucks in der zweiten Bremsdruckleitung, insbesondere mittels erster und zweiter Drucksensoren, und Bereitstellen entsprechender erster und zweiter Drucksignale an einer elektronischen Steuereinheit. Weiterhin ist denkbar, dass das Verfahren die Schritte aufweist, wie beispielsweise Abzweigen eines ersten Steuerdrucks von der ersten Bremsdruckleitung, die einem ersten pneumatisch schaltbaren Ventil zugeführt wird sowie Abzweigen eines zweiten Steuerdrucks von der zweiten Bremsdruckleitung, die dem ersten pneumatisch schaltbaren Ventil zugeführt wird.

In einem dritten Aspekt wird die eingangs genannte Aufgabe gelöst durch ein Nutzfahrzeug mit einem elektronisch steuerbaren pneumatischen Bremssystem, das eine elektropneumatische Einrichtung nach einer der vorstehend beschriebenen bevorzugten Ausführungsformen einer elektropneumatischen Einrichtung gemäß dem ersten Aspekt der Erfindung aufweist. Es soll verstanden werden, dass das Nutzfahrzeug gemäß dem dritten Aspekt der Erfindung sowie die elektropneumatische Einrichtung gemäß dem ersten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung zum ersten Aspekt der Erfindung verwiesen. Das elektronisch steuerbare pneumatische Bremssystem des Nutzfahrzeugs kann darüber hinaus weitere Elemente aufweisen, wie insbesondere ein Zentralmodul, eine Einheit für autonomes Fahren, einen Bremswertgeber sowie ein Parkbremsmodul. Das Zentralmodul kann gleichzeitig auch als Hinterachsmodulator ausgebildet sein. Zusätzlich ist vorzugsweise ein Vorderachsmodulator vorgesehen. Sowohl der Vorderachsmodular als auch das Zentralmodul, das auch die Funktionen des Hinterachsmodulators aufweist, als auch das Parkbremsmodul können als elektropneumatische Einrichtung ausgebildet sein. Insofern ist es auch bevorzugt, dass das elektronisch steuerbare pneumatische Bremssystem mehr als eine elektropneumatische Einrichtung der vorstehend beschriebenen Art aufweist. Beispielsweise kann sowohl für den Vorderachsmodulator, das Zentralmodul, das auch als Hinterachsmodulator ausgebildet ist, den separaten Hinterachsmodulator und das Parkbremsmodul eine eigene Schutzventileinheit oder auch zwei oder mehr Schutzventileinheiten vorgesehen sein, sodass sämtliche Bremsaktuatoren des Bremssystems redundant verrohrt sind.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine elektropneumatische Einrichtung in einem ersten Ausführungsbeispiel;
- Figur 2: eine elektropneumatische Einrichtung in einem zweiten Ausführungsbeispiel;
- Figur 3: eine elektropneumatische Einrichtung in einem dritten Ausführungsbeispiel;
- Figur 4: ein viertes Ausführungsbeispiel einer elektropneumatischen Einrichtung;
- Figur 5: ein erstes Ausführungsbeispiel einer Schutzventileinheit;
- Figur 6: ein zweites Ausführungsbeispiel einer Schutzventileinheit;
- Figur 7: ein drittes Ausführungsbeispiel einer Schutzventileinheit;
- Figur 8: ein viertes Ausführungsbeispiel einer Schutzventileinheit; und in
- Figur 9: ein Nutzfahrzeug mit einem elektronisch steuerbaren pneumatischen Bremssystem.

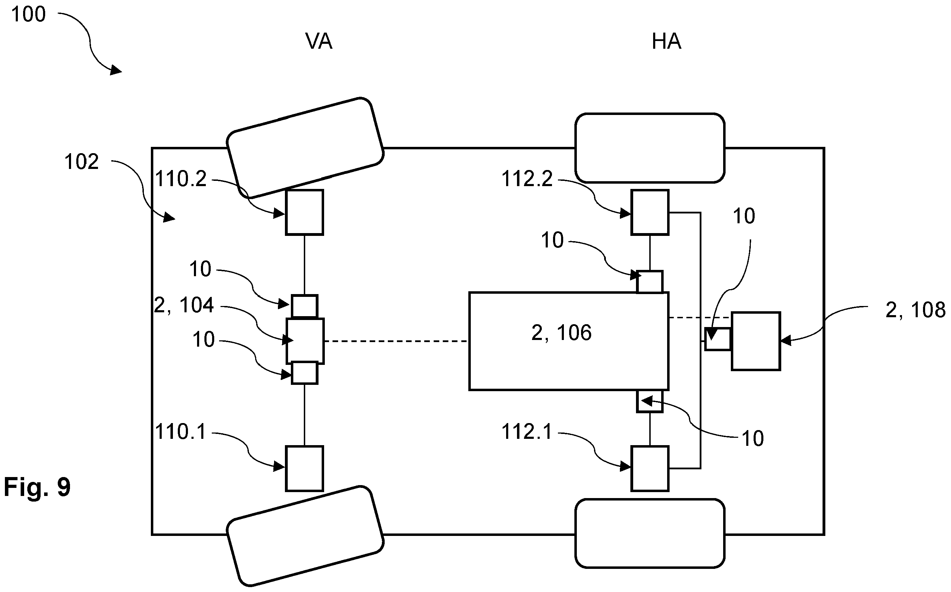

Eine elektropneumatische Einrichtung 1, die im Rahmen eines elektronisch steuerbaren pneumatischen Bremssystems 102 (vgl. Fig. 9) eingesetzt werden kann, aber auch in rein pneumatisch gesteuerten Bremssystemen eingesetzt werden könnte, weist als zentrales Element einen elektropneumatischen Bremsdruckmodulator 2 auf. Der elektropneumatische Bremsdruckmodulator 2 kann insbesondere als Achsmodulator, wie beispielsweise Vorderachsmodulator 104, Hinterachsmodulator 106 oder Zusatzachsmodulator ausgebildet sein, oder auch als Parkbremsmodulator 108 oder Anhängersteuerventil (vgl. jeweils Fig. 9). Der elektropneumatische Bremsdruckmodulator 2 ist eingangsseitig mit einem Druckluftvorrat 4 verbunden und empfängt von diesem einen Vorratsdruck pV. Der Druckluftvorrat 4 kann darüber hinaus mit weiteren hier nicht gezeigten Modulen verbunden sein und an diese einen entsprechenden Vorratsdruck bereitstellen.

Der elektropneumatische Bremsdruckmodulator 2 weist im Inneren hier nicht gezeigte ein oder mehrere Ventile auf, nämlich insbesondere und vorzugsweise ein pneumatisches Relaisventil sowie ein oder mehrere elektromagnetisch schaltbare Ventile. Sowohl das Relaisventil als auch die elektromagnetisch schaltbaren Ventile empfangen den Vorratsdruck pV. Die elektromagnetischen Ventile sind dann dazu ausgebildet, einen Steuerdruck an dem Relaisventil bereitzustellen, sodass das Relaisventil dann in Abhängigkeit von dem empfangenen Steuerdruck einen Bremsdruck pB an einem Bremsdruckanschluss 6 des elektropneumatischen Bremsdruckmodulators 2 auszusteuern.

Darüber hinaus weist der elektropneumatische Bremsdruckmodulator 2 einen elektrischen Anschluss 8 auf, über den der elektropneumatische Bremsdruckmodulator 2 beispielsweise mit einem Fahrzeug-BUS, einem sonstigen BUS oder einer anderen elektrischen Leitung verbunden ist. Über den elektrischen Anschluss 8 kann der elektropneumatische Bremsdruckmodulator 2 ein elektrisches oder elektronisches Bremssignal SB empfangen, welches beispielsweise ein Bremsanforderungssignal, ein Verzögerungsanforderungssignal, ein Parkbremssignal oder ein direkter elektrischer Impuls sein kann, der unmittelbar auf ein oder mehrere elektromagnetisch schaltbare Ventile wirkt, für den Fall, dass der elektropneumatische Bremsdruckmodulator 2 über keine eigene Intelligenz verfügt. In Abhängigkeit vom Bremssignal SB wird dann der Bremsdruck pB am Bremsdruckanschluss 6 ausgesteuert.

Über den Bremsdruckanschluss 6 ist der Bremsdruckmodulator 2 mit einer Schutzventileinheit 10 verbunden, die eben diesen ausgesteuerten Bremsdruck pB empfängt. Die Schutzventileinheit 10 ist über eine erste Bremsdruckleitung 12 und eine zweite Bremsdruckleitung 14, die redundant zueinander ausgebildet sind, mit einem Bremsaktuator 16 verbunden. Der Bremsaktuator 16 kann ein üblicher Betriebsbremsaktuator sein, oder beispielsweise ein Federspeicherteil eines Federspeicherbremszylinders oder eines Kombizylinders. Auch wenn im vorliegenden Fall nur ein Betriebsbremszylinder beschrieben werden sollte, soll verstanden werden, dass ähnliche und analoge Ausführungen auch für einen Federspeicheraktuator gelten.

Die Schutzventileinheit 10 weist einen Schutzventileinlass 10.1, einen ersten Schutzventilauslass 10.2 und einen zweiten Schutzventilauslass 10.3 auf. Der Schutzventileinlass 10.1 ist mit dem Bremsdruckanschluss 6 verbunden und empfängt den vom Bremsdruckmodulator 2 ausgesteuerten Bremsdruck pB von diesem. An den ersten Schutzventilauslass 10.2 ist die erste Bremsdruckleitung 12 und an den zweiten Schutzventilauslass 10.3 die zweite Bremsdruckleitung 14 angeschlossen. Im Normalbetrieb steuert die Schutzventileinheit 10 den empfangenen Bremsdruck pB direkt an die ersten und zweiten Schutzventilauslässe 10.2, 10.3 weiter, sodass in den ersten und zweiten Bremsdruckleitungen 12, 14 der Bremsdruck pB anliegt, und der im Folgenden als erster Bremsdruck pB1 und zweiter Bremsdruck pB2 bezeichnet wird. Stromabwärts der ersten und zweiten Bremsdruckleitungen 12, 14 und stromaufwärts des Bremsaktuators 16 ist ein Wechselventil 18 vorgesehen, welches den ersten und zweiten Bremsdruck pB1, pB2 zusammenführt und wiederum als Bremsdruck pB an dem Bremsaktuator 16 aussteuert. Das Wechselventil 18 weist einen ersten Wechselventilanschluss 18.1 auf, der mit der ersten Bremsdruckleitung 12 verbunden ist. Es weist einen zweiten Wechselventilanschluss 18.2 auf, der mit der zweiten Bremsdruckleitung 14 verbunden ist. Ferner weist das Wechselventil 18 einen dritten Wechselventilanschluss 18.3 auf, der mit dem Bremsaktuator 16 verbunden ist. Das Wechselventil 18 ist als sogenanntes Select-High-Ventil ausgebildet und steuert den jeweils höheren des am ersten und zweiten Wechselventilanschluss 18.1, 18.2 anliegenden Druck am dritten Wechselventilanschluss 18.3 aus.

Die Schutzventileinheit 10 ist so ausgebildet, dass für den Fall, dass eine der ersten und zweiten Bremsdruckleitungen 12, 14, eine Leckage hat oder bricht, der dieser ersten oder zweiten Bremsdruckleitung 12, 14 zugeordnete Schutzventilauslass 10.2, 10.3 gedrosselt wird. Insbesondere ist die Schutzventileinheit 10 dazu ausgebildet, bei Leckage oder Bruch der ersten Bremsdruckleitung 12 die Aussteuerung des ersten Bremsdrucks pB1 am ersten Schutzventilauslass 10.2 zu drosseln oder zu verhindern, und bei Leckage oder Bruch der zweiten Bremsdruckleitung 14 die Aussteuerung des zweiten Bremsdrucks pB2 am zweiten Schutzventilauslass 10.3 zu drosseln oder zu verhindern. Auf diese Weise ist es möglich, dass der Bremsdruck pB noch über die intakte Bremsdruckleitung der ersten und zweiten Bremsdruckleitungen 12, 14 dem Bremsaktuator 16 bereitgestellt wird, andererseits wird auch verhindert, dass der Druckluftvorrat 4 leerläuft. Auf diese Weise kann auch sichergestellt werden, dass ein Fahrzeug, insbesondere ein autonomes oder semiautonomes Fahrzeug, auch bei einem Fehler, nämlich bei Leckage oder Bruch einer der beiden Bremsdruckleitungen 12, 14, weiter voll funktionsfähig ist.

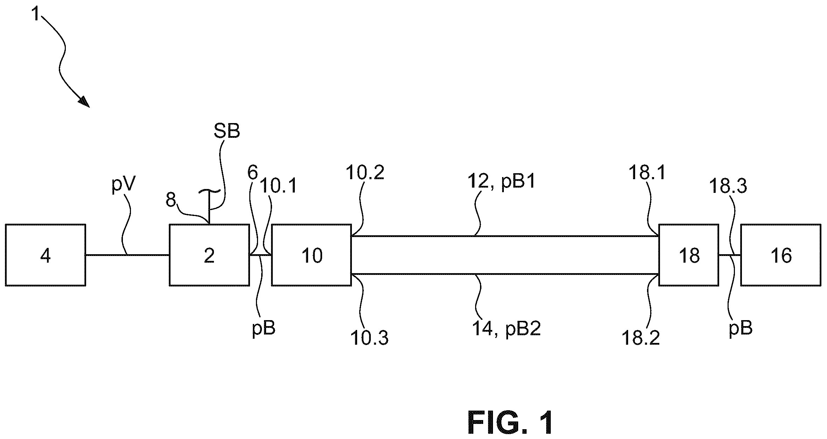

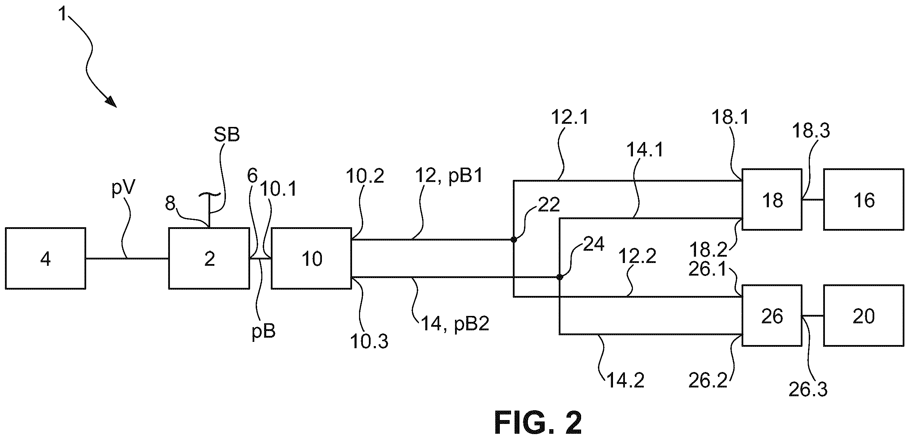

Fig. 2 zeigt ein Ausführungsbeispiel, das auf Fig. 1 basiert und insofern sind gleiche und ähnliche Elemente mit gleichen Bezugszeichen versehen. Im Folgenden sind insbesondere Unterschiede zum ersten Ausführungsbeispiel der Fig. 1 hervorgehoben.

Im Unterschied zum ersten Ausführungsbeispiel (Fig. 1) ist im zweiten Ausführungsbeispiel ein zweiter Bremsaktuator 20 vorgesehen, der ebenfalls über die ersten und zweiten Bremsdruckleitungen 12, 14 versorgt wird. Beispielsweise ist der erste Bremsaktuator 16 ein Bremsaktuator für ein rechtes Rad einer Achse und der zweite Bremsaktuator 20 ist ein Bremsaktuator für ein linkes Rad derselben Achse. Die Schutzventileinheit 10 ist hier einkanalig ausgeführt, auch wenn sie zwei Bremsdruckleitungen 12, 14 speist. In beide Bremsdruckleitungen 12, 14 wird derselbe Bremsdruck pB ausgesteuert und eine radgerechte Aussteuerung wird hier nicht umgesetzt. Es können aber noch zusätzliche ABS-Ventile vorgesehen sein, um eine radgerechte und schlupfgeregelte Bremsung umzusetzen.

Um die Bremsaktuatoren 16, 20 mit Bremsdruck pB zu versorgen, ist in der ersten Bremsdruckleitung 12 eine Verzweigung 22 vorgesehen, in einen ersten Abschnitt 12.1 der ersten Bremsdruckleitung 12 und einen zweiten Abschnitt 12.2 der ersten Bremsdruckleitung 12. Ebenso ist ein zweiter Verzweigungspunkt 24 in der zweiten Bremsdruckleitung 14 vorgesehen, an dem die zweite Bremsdruckleitung 14 in einen ersten Abschnitt 14.1 der zweiten Bremsdruckleitung 14 und einen zweiten Abschnitt 14.2 der zweiten Bremsdruckleitung 14 verzweigt wird. So wird wiederum jeder der ersten und zweiten Bremsaktuatoren 16, 20 sowohl mit Bremsdruck pB1 aus der ersten Bremsdruckleitung 12 als auch Bremsdruck pB2 aus der zweiten Bremsdruckleitung 14 versorgt. Stromabwärts der ersten und zweiten Bremsdruckleitungen 12, 14 und vor dem zweiten Bremsaktuator 20 ist ein zweites Wechselventil 26 angeordnet, welches ebenso ausgeführt sein kann wie das Wechselventil 18. Das zweite Wechselventil 26 weist einen ersten Wechselventilanschluss 26.1 auf, der mit dem zweiten Abschnitt 12.2 der ersten Bremsdruckleitung 12 verbunden ist, sowie einen zweiten Wechselventilanschluss 26.2, der mit dem zweiten Abschnitt 14.2 der zweiten Bremsdruckleitung 14 verbunden ist. Der dritte Wechselventilanschluss 26.3 des zweiten Wechselventils 26 ist mit dem zweiten Bremsaktuator 20 verbunden.

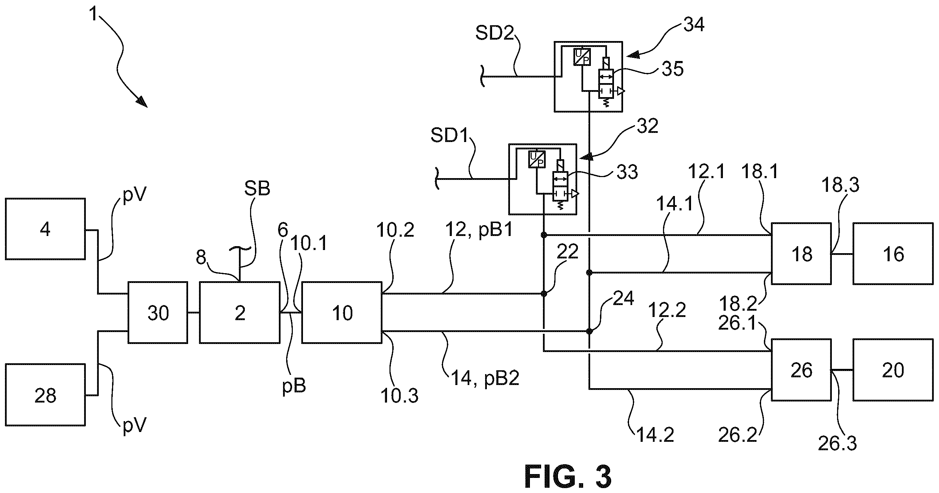

Ein drittes Ausführungsbeispiel gemäß Fig. 3 basiert im Wesentlichen auf dem zweiten Ausführungsbeispiel gemäß Fig. 2, sodass die gleichen Elemente wiederum mit gleichen Bezugszeichen versehen sind. Insofern wird vollumfänglich auf die obige Beschreibung Bezug genommen.

Zunächst ist zusätzlich zum Druckluftvorrat 4 ein zweiter Druckluftvorrat 28 vorgesehen, der ebenfalls Vorratsdruck pV bereitstellt. Dieser zweite Druckluftvorrat 28 kann der Druckluftvorrat eines zweiten Bremskreises oder Backup-Kreises sein. Der erste Druckluftvorrat 4 und der zweite Druckluftvorrat 28 sind dann über ein Vorrat-Wechselventil 30, welches wiederum als Select-High-Ventil ausgebildet sein kann, mit dem elektropneumatischen Bremsdruckmodulator 2 verbunden. Auf diese Weise wird jeweils der höhere des vom ersten und zweiten Druckluftvorrat 4, 28 gelieferten Vorratsdrucks pV über das Vorrat-Wechselventil 30 an den elektropneumatischen Bremsdruckmodulator 2 ausgesteuert.

Darüber hinaus umfasst die elektropneumatische Einrichtung 1 gemäß dem dritten Ausführungsbeispiel (Fig. 3) eine erste Diagnoseeinheit 32, die dazu vorgesehen ist, eine Leckage oder einen Bruch der ersten Bremsdruckleitung 12 zu erfassen sowie eine zweite Diagnoseeinheit 34, die dazu vorgesehen ist, eine Leckage oder einen Bruch der zweiten Bremsdruckleitung 14 zu erfassen. Die erste Diagnoseeinheit 32 stellt ein entsprechendes erstes Diagnosesignal SD1 bereit und die zweite Diagnoseeinheit 34 stellt ein zweites Diagnosesignal SD2 bereit. Die ersten und zweiten Diagnosesignale SD1, SD2 werden vorzugsweise an einer elektronischen Steuereinheit, wie beispielsweise einer Zentraleinheit, einer Einheit für autonomes Fahren oder einer elektronischen Steuereinheit des elektropneumatischen Bremsdruckmodulators 2 bereitgestellt. Vorzugsweise sind die ersten und zweiten Diagnoseeinheiten 32, 34 als Drucksensoren ausgebildet und stellen insofern erste und zweite Drucksignale bereit. Zu diesem Zweck sind die ersten und zweiten Diagnoseeinheiten 32, 34 mit den entsprechenden ersten und zweiten Bremsdruckleitungen 12, 14 verbunden. Im gezeigten Ausführungsbeispiel (Fig. 3) weist die erste Diagnoseeinheit 32 zusätzlich ein erstes Diagnoseventil 33 auf und die zweite Diagnoseeinheit 34 weist ein zweites Diagnoseventil 35 auf. Diese Ventile 33, 35 können dann in eine offene Schaltstellung gebracht werden, wenn die entsprechende Bremsdruckleitung 12, 14 ein Leck hat. Die entsprechende Bremsdruckleitung 12, 14 kann dann vollständig entlüftet werden, sodass die Schutzventileinheit 10 die entsprechende Bremsdruckleitung 12, 14 vollständig absperren kann. Zudem dienen die ersten und zweiten Diagnoseeinheiten 32, 34 dazu, für den Fall, dass die elektropneumatische Einrichtung 1 in einem autonomen oder teilautonomen Fahrzeug untergebracht ist, der autonomen Einheit Informationen über den Zustand des Bremssystems bereitzustellen, sodass entsprechende Maßnahmen getroffen werden können.

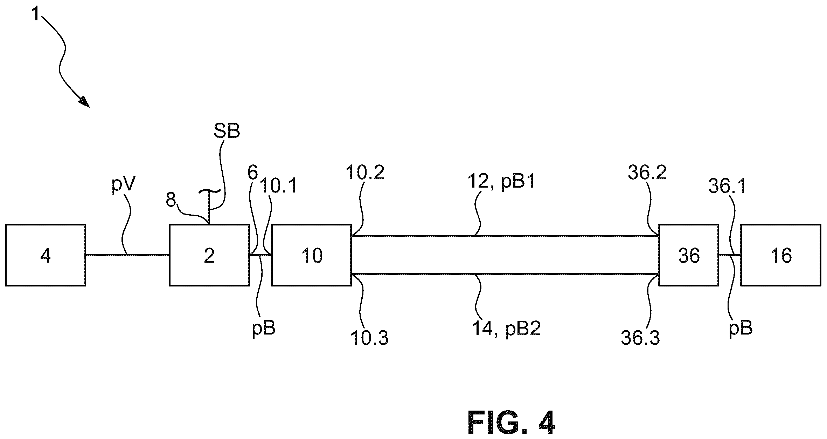

Das in Fig. 4 gezeigte Ausführungsbeispiel basiert nun wiederum auf dem in Fig. 1 gezeigten ersten Ausführungsbeispiel, wobei gleiche und ähnliche Elemente mit gleichen Bezugszeichen versehen sind, sodass vollumfänglich auf die obige Beschreibung Bezug genommen wird.

Im Unterschied zum ersten Ausführungsbeispiel (Fig. 1) ist anstelle des Wechselventils 18 eine Bremsaktuator-Schutzeinheit 36 vorgesehen, welche einen ersten Schutzeinheitanschluss 36.1 aufweist, der mit dem Bremsaktuator 16 verbunden ist, einen zweiten Schutzeinheitanschluss 36.2, der mit der ersten Bremsdruckleitung 12 verbunden ist, sowie einen dritten Schutzeinheitanschluss 36.3, der mit der zweiten Bremsdruckleitung 14 verbunden ist. Die Bremsaktuator-Schutzeinheit 36 kann insbesondere identisch ausgebildet sein zu der Schutzventileinheit 10, ist aber genau umgekehrt verschaltet. Insofern entspricht der erste Schutzeinheitanschluss 36.1 dem Schutzventileinlass 10.1, der zweite Schutzeinheitanschluss 36.2 dem ersten Schutzventilauslass 10.2 und der dritte Schutzeinheitanschluss 36.3 entspricht dem zweiten Schutzventilauslass 10.3. Auf diese Weise kann die Zusammenführung der ersten und zweiten Bremsdrücke pB1, pB2 für den Bremsaktuator 16 umgesetzt werden.

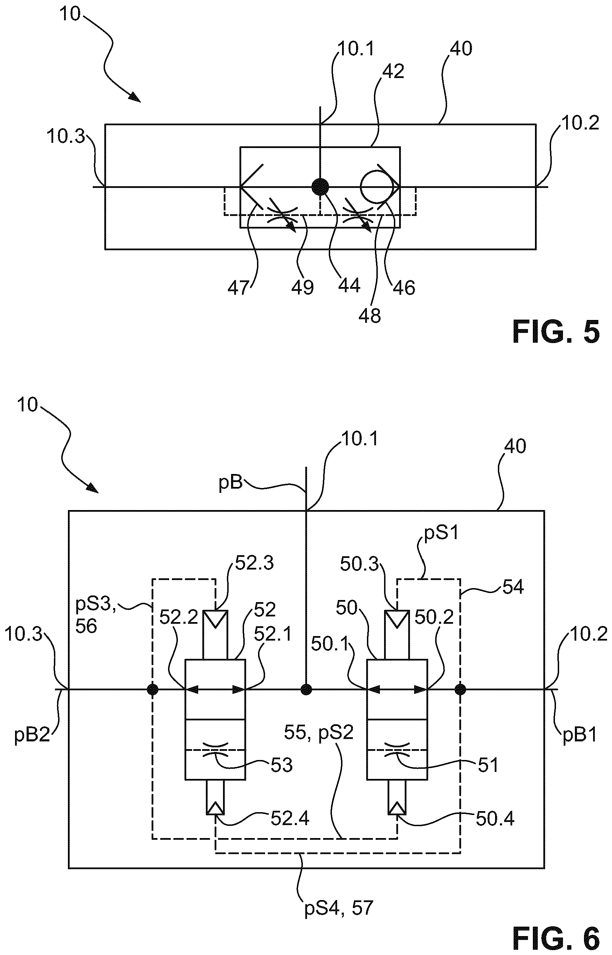

In Fig. 5 ist ein erstes Ausführungsbeispiel einer Schutzventileinheit 10 illustriert. Die Schutzventileinheit 10 weist einen Ventilkörper 40 auf, der auch als Schutzventilgehäuse bezeichnet werden kann und den Grundkörper der Schutzventileinheit 10 bildet. In dem Ventilkörper 40 ist eine Arbeitskammer 42 ausgebildet, in die der Schutzventileinlass 10.1, der erste Schutzventilauslass 10.2 und der zweite Schutzventilauslass 10.3 münden. Innerhalb der Arbeitskammer 42 ist ein Ventilelement 44 beweglich angeordnet. Das Ventilelement 44 ist in Fig. 5 in der rechten Endlage gezeigt und liegt gegen einen ersten Ventilsitz 46 an, der dem ersten Schutzventilauslass 10.2 zugeordnet ist. Dem zweiten Schutzventilauslass 10.3 ist ein zweiter Ventilsitz 47 zugeordnet. Der Schutzventileinlass 10.1 bleibt hingegen offen. Wenn also beispielsweise am ersten Schutzventilauslass 10.2 bei Aussteuerung eines Bremsdrucks pB am Schutzventileinlass 10.1 kein Gegendruck entsteht, bewegt sich das Ventilelement 44 in die rechte Endlage gegen den ersten Ventilsitz 46 und sperrt den ersten Schutzventilauslass 10.2 ab. Druckluft kann dann noch vom Schutzventileinlass 10.1 über die Arbeitskammer 42 zum zweiten Schutzventilauslass 10.3 strömen. Vorzugsweise und gemäß dem hier gezeigten Ausführungsbeispiel ist ferner ein erster gedrosselter Bypass 48 vorgesehen, welcher die Arbeitskammer 42 mit dem ersten Schutzventilauslass 10.2 verbindet, unter Umgehung des ersten Ventilsitzes 46. Ferner ist in analoger Weise ein zweiter gedrosselter Bypass 49 vorgesehen, der die Arbeitskammer 42 unter Umgehung des zweiten Ventilsitzes 47 mit dem zweiten Schutzventilauslass 10.3 verbindet. Auf diese Weise wird ein Überströmen der ersten und zweiten Ventilsitze 46, 47 erlaubt, was im Normalbetrieb, wenn keine Leckage und kein Bruch der ersten und zweiten Bremsdruckleitungen 12, 14 vorliegt, zur höheren Stabilität führt und insbesondere das Ventilelement 44 in eine Mittellage, zwischen den ersten und zweiten Ventilsitzen 46, 47 bringt. Im Grunde ist die Schutzventileinheit 10 nach dem ersten Ausführungsbeispiel (Fig. 5) basierend auf einem herkömmlichen Wechselventil gebildet, unterscheidet sich jedoch von einem herkömmlichen Wechselventil insbesondere durch die ersten und zweiten Bypässe 48, 49.

Die Fig. 6 bis 8 zeigen zweite bis vierte Ausführungsbeispiele einer Schutzventileinheit 10, die darauf basieren, dass zwei pneumatisch schaltbare Ventile vorgesehen sind.

Die Schutzventileinheit 10 ist gemäß dem zweiten Ausführungsbeispiel (Fig. 6) wiederum in einem Ventilkörper 40 dargestellt, wobei dies nicht zwingend erforderlich ist. Ebenso könnte in dieser Ausführungsform auch ohne einen Ventilkörper 40 die Verschaltung der einzelnen Ventilelemente auf herkömmliche Weise umgesetzt werden.

Die Schutzventileinheit 10 gemäß diesem Ausführungsbeispiel weist ein erstes pneumatisch schaltbares Ventil 50 und ein zweites pneumatisch schaltbares Ventil 52 auf. Das erste pneumatisch schaltbare Ventil 50 weist einen ersten Schaltventilanschluss 50.1 auf, der mit dem Schutzventileinlass 10.1 in Verbindung steht. Das erste pneumatisch schaltbare Ventil 50 weist ferner einen zweiten Schaltventilanschluss 50.2 auf, der mit dem ersten Schutzventilauslass 10.2 in Verbindung steht. In einer ersten in Fig. 6 gezeigten Schaltstellung sind die ersten und zweiten Schaltventilanschlüsse 50.1, 50.2 ungedrosselt verbunden. In einer zweiten in Fig. 6 nicht gezeigten Schaltstellung sind die ersten und zweiten Schaltventilanschlüsse 50.1, 50.2 gedrosselt verbunden. Zu diesem Zweck weist das erste pneumatisch schaltbare Ventil 50 eine erste Drossel 51 auf. Zum Schalten des ersten pneumatisch schaltbaren Ventils 50 weist dieses einen ersten Steueranschluss 50.3 und einen zweiten Steueranschluss 50.4 auf. Der erste Steueranschluss 50.3 ist über eine erste Steuerleitung 54 mit einer Leitung stromabwärts des zweiten Schaltventilanschlusses 50.2 bzw. dem ersten Schutzventilauslass 10.2 verbunden und steuert so den ersten Bremsdruck pB1 als ersten Steuerdruck pS1 am ersten Steueranschluss 50.3 aus. Eine zweite Steuerleitung 55 zweigt von einer Leitung zwischen dem zweiten pneumatisch schaltbaren Ventil 52 und dem zweiten Schutzventilauslass 10.3 bzw. vom zweiten Schutzventilauslass 10.3 ab und steuert so den zweiten Bremsdruck pB2 als zweiten Steuerdruck pS2 am zweiten Steueranschluss 50.4 aus. Sobald der erste Steuerdruck pS1 einen ersten Schwellwert überschreitet, schaltet das erste pneumatisch schaltbare Ventil 50 in die erste in Fig. 6 gezeigte Schaltstellung. Sobald aber dieser Druck absinkt, insbesondere unter den ersten Schwellwert, der zweite Steuerdruck pS2 aber oberhalb eines zweiten Schwellwerts ist, schaltet das erste pneumatisch schaltbare Ventil 50 in die in Fig. 6 nicht gezeigte zweite Schaltstellung, sodass die Aussteuerung von Druck an dem ersten Schutzventilauslass 10.2 gedrosselt erfolgt.

In übereinstimmender Weise weist das zweite pneumatisch schaltbare Ventil 52 einen dritten Schaltventilanschluss 52.1, einen vierten Schaltventilanschluss 52.2, einen dritten Steueranschluss 52.3 sowie einen vierten Steueranschluss 52.4 auf. Wiederum ist die erste in Fig. 6 gezeigte Schaltstellung des zweiten pneumatisch schaltbaren Ventils 52 nicht gedrosselt, während die zweite in Fig. 6 nicht gezeigte Schaltstellung gedrosselt ist. Dazu weist das zweite pneumatisch schaltbare Ventil 52 eine zweite Drossel 53 auf. Eine dritte Steuerleitung 56 zweigt von derselben Stelle ab wie die zweite Steuerleitung 55, auch wenn dies nicht erforderlich ist, steuert aber jedenfalls den zweiten Bremsdruck pB2 als dritten Steuerdruck pS3 am dritten Steueranschluss 52.3 aus. Eine vierte Steuerleitung 57 zweigt von derselben Stelle wie die erste Steuerleitung 54 ab, auch wenn dies nicht erforderlich ist, steuert jedoch jedenfalls den ersten Bremsdruck pB1 am vierten Steueranschluss 52.4 als vierten Steuerdruck pS4 aus. Auch hier gilt wieder, dass, wenn der dritte Steuerdruck pS3 einen dritten Schwellwert überschreitet, das zweite pneumatisch schaltbare Ventil 52 in die erste in Fig. 6 gezeigte Schaltstellung geschaltet wird, während es in die zweite in Fig. 6 nicht gezeigte Schaltstellung geschaltet wird, wenn der dritte Steuerdruck pS3 den Schwellwert unterschreitet, jedoch der vierte Steuerdruck pS4 oberhalb eines vierten Schwellwerts ist.

Ein drittes Ausführungsbeispiel einer Schutzventileinheit 10 basiert auf dem zweiten Ausführungsbeispiel (Fig. 6), sodass gleiche und ähnliche Elemente mit gleichen Bezugszeichen versehen sind. Insofern wird vollumfänglich auf die obige Beschreibung zum zweiten Ausführungsbeispiel der Schutzventileinheit 10 (Fig. 6) verwiesen.

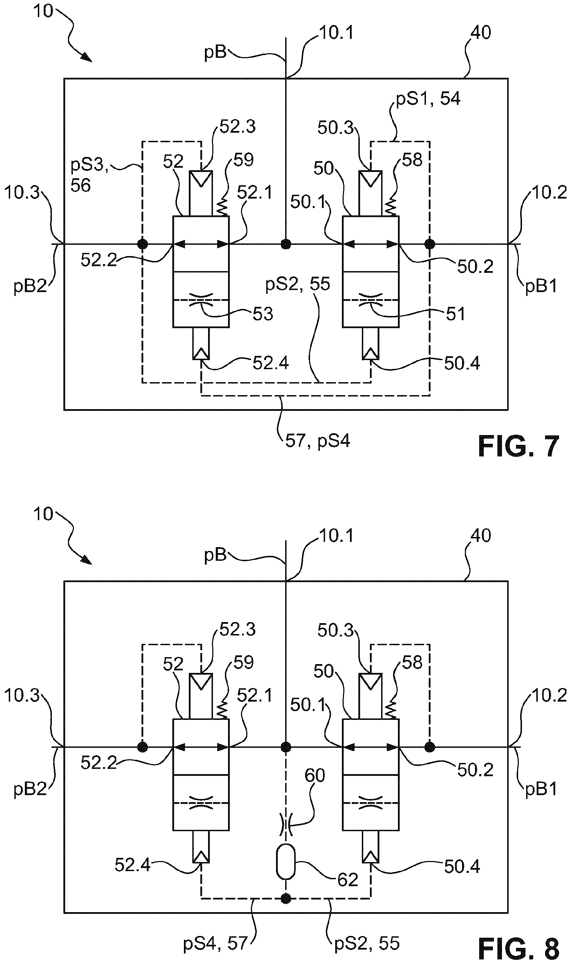

Im Unterschied zum zweiten Ausführungsbeispiel (Fig. 6) ist im dritten Ausführungsbeispiel (Fig. 7) zusätzlich eine erste Feder 58 an dem ersten pneumatisch schaltbaren Ventil 50 vorgesehen, welche das erste pneumatisch schaltbare Ventil 50 in die erste in Fig. 7 gezeigte Schaltstellung federbelastet. Ebenso ist eine zweite Feder 59 am zweiten pneumatisch schaltbaren Ventil 52 vorgesehen, die das zweite pneumatisch schaltbare Ventil 52 in die erste in Fig. 7 gezeigte Schaltstellung federbelastet. Auf diese Weise kann sichergestellt werden, dass bei gleich hohen ersten und zweiten Bremsdrücken pB1, pB2 kein undefinierter Zustand der ersten und zweiten pneumatisch schaltbaren Ventile 50, 52 auftritt, sondern stabil die erste Schaltstellung eingenommen ist.

Ein viertes Ausführungsbeispiel der Schutzventileinheit 10 basiert im Grunde auf dem zweiten Ausführungsbeispiel (Fig. 6), kann aber zusätzlich wie im dritten Ausführungsbeispiel (Fig. 7) beschrieben die ersten und zweiten Federn 58, 59 aufweisen. Dies ist jedoch im vierten Ausführungsbeispiel (Fig. 8) nur optional.

Der wesentliche Unterschied des vierten Ausführungsbeispiels (Fig. 8) zum zweiten und dritten Ausführungsbeispiel (Fig. 6, Fig. 7) liegt in der Verschaltung der zweiten und vierten Steueranschlüsse 50.4, 52.4. Während im zweiten und dritten Ausführungsbeispiel (Fig. 6, Fig. 7) dem zweiten Steueranschluss 50.4 des ersten pneumatisch schaltbaren Ventils 50 der zweite Bremsdruck pB2 zugeführt wird und dem vierten Steueranschluss 52.4 des zweiten pneumatisch schaltbaren Ventils 52 der erste Bremsdruck pB1 zugeführt wird, wird diesen beiden Steueranschlüssen 50.4, 52.4 im vierten Ausführungsbeispiel (Fig. 8) der am Schutzventileinlass 10.1 ausgesteuerte Bremsdruck zugeführt, vorzugsweise gedrosselt. Während also bei dem zweiten und dritten Ausführungsbeispiel (Fig. 6, Fig. 7) bei Leckage von beiden Bremsdruckleitungen 12, 14 sowohl das erste als auch das zweite pneumatisch schaltbare Ventil 50, 52 in der zweiten Schaltstellung sind, ist die zweite Schaltstellung der pneumatisch schaltbaren Ventile 50, 52 im vierten Ausführungsbeispiel (Fig. 8) nicht abhängig von dem von der Schutzventileinheit 10 ausgesteuerten Bremsdruck pB1, pB2, sondern von dem von der Schutzventileinheit 10 empfangenen Bremsdruck pB, der von dem Bremsdruckmodulator 2 am Schutzventileinlass 10.1 ausgesteuert wird.

Zu diesem Zweck verläuft im vierten Ausführungsbeispiel die zweite Steuerleitung 55 als Abzweigung von dem Schutzventileinlass 10.1 und die vierte Steuerleitung 57 ebenfalls als Abzweigung des Schutzventileinlasses 10.1. Zwischen den Schutzventileinlass 10.1 und die zweite bzw. vierte Steuerleitung 55, 57 ist zudem eine dritte Drossel 60 geschaltet sowie ein vergrößertes Volumen 62, wobei es nicht zwingend erforderlich ist, dass beide vorgesehen sind, gegebenenfalls kann auch eines von beiden, der dritten Drossel 60 und des vergrößerten Volumens 62, ausreichen. Auch auf diese Weise kann die Schutzventileinheit 10 gemäß der Erfindung umgesetzt werden.

Es soll verstanden werden, dass die Schutzventileinheit 10, wie sie in den Fig. 5 bis 8 gezeigt ist, auch unabhängig von der elektropneumatischen Einrichtung der Fig. 1 bis 4 beansprucht werden kann. Insofern ist die Schutzventileinheit 10 unabhängig von den weiteren in den Fig. 1 bis 4 gezeigten Elementen, insbesondere vom Bremsdruckmodulator 2, den ersten und zweiten Bremsdruckleitungen 12, 14, dem Wechselventil 18 und dem Bremsaktuator 16. Auch kann eine Einheit aus Bremsdruckmodulator 2 und Schutzventileinheit 10 sowie Schutzventileinheit 10 mitsamt erster und zweiter Bremsdruckleitung 12, 14 und gegebenenfalls Bremsdruckmodulator 2 beansprucht werden.

Figur 9 zeigt in einer Übersicht ein Nutzfahrzeug 100 mit einem elektronisch steuerbaren pneumatischen Bremssystem 102. Das Nutzfahrzeug weist eine Vorderachse VA und eine Hinterachse HA auf, es soll aber verstanden werden, dass es darüber hinaus weitere Achsen, wie zum Beispiel nicht gezeigte Zusatzachsen, aufweisen kann. Es kann zudem mit einem nicht gezeigten Anhängersteuerventil zur Versorgung eines nicht gezeigten Anhängers versehen sein.

Das Bremssystem 102 weist einen Vorderachsmodulator 104, ein Zentralmodul, das gleichzeitig als Hinterachsmodulator 106 fungiert und einen Parkbremsmodulator 108 auf. Diese Module bilden jeweils Bremsdruckmodulatoren 2 der oben beschriebenen Art, wobei auch nur einer oder zwei dieser Module so ausgebildet sein kann. Jedem der Bremsdruckmodulatoren 2 ist ein Bremskreis mit einem separaten Druckluftvorrat zugeordnet, die hier aus Gründen der Übersichtlichkeit nicht gezeigt sind.

Der Vorderachsmodulator 104 ist zweikanalig ausgebildet und umfasst eine Schutzventileinheit 10 für das linke Vorderrad, dem ein erster Bremsaktuator 16 in Form eines ersten Betriebsbremsaktuators 110.1 zugeordnet ist. Ebenso ist dem rechten Vorderrad ein zweiter Bremsaktuator 16 in Form eines zweiten Betriebsbremsaktuators 110.2 zugeordnet, der ebenfalls mit einer Schutzventileinheit 10 verbunden ist. Die Hinterachse wird im Betriebsfall durch den Hinterachsmodulator 106 versorgt, der ebenfalls zweikanalig ausgebildet ist, und über einen ersten Kanal und eine Schutzventileinheit 10 einen ersten kombinierten Betriebsbrems- und Federspeicheraktuator 112.1 am linken Hinterrad versorgt und über einen zweiten Kanal und eine Schutzventileinheit 10 einen zweiten kombinierten Betriebsbrems- und Federspeicheraktuator 112.2 am rechten Hinterrad versorgt.

Ferner ist der Parkbremsmodulator 108 mit einer Schutzventileinheit 10 versehen und einkanalig ausgebildet. Der Parkbremsmodulator 108 betätigt die Federspeicheraktuatoren der kombinierten Betriebsbrems- und Federspeicheraktuatoren 112.1, 112.2 an der Hinterachse HA.

Für den Fall, dass die Schutzventileinheiten 10, wie mit Bezug auf Figur 3 beschrieben, mit Diagnoseeinheiten 32, 34 ausgestattet sind, sind diese vorzugsweise mit einer etwaigen elektronischen Steuereinheit des jeweils zugeordneten Bremsdruckmodulators 2 und/oder mit dem Zentralmodul verbunden.

### Bezugszeichenliste (Teil der Beschreibung)

- 1: Elektropneumatische Einrichtung
- 2: elektropneumatischer Bremsdruckmodulator
- 4: Druckluftvorrat
- 6: Bremsdruckanschluss
- 8: Elektrischer Anschluss
- 10: Schutzventileinheit
- 10.1: Schutzventileinlass
- 10.2: Erster Schutzventilauslass
- 10.3: Zweiter Schutzventilauslass
- 12: Erste Bremsdruckleitung
- 12.1: Erster Abschnitt der ersten Bremsdruckleitung
- 12.2: Zweiter Abschnitt der ersten Bremsdruckleitung
- 14: Zweite Bremsdruckleitung
- 14.1: Erster Abschnitt der zweiten Bremsdruckleitung
- 14.2: Zweiter Abschnitt der zweiten Bremsdruckleitung
- 16: Bremsaktuator
- 18: Wechselventil
- 18.1: Erster Wechselventilanschluss
- 18.2: Zweiter Wechselventilanschluss
- 18.3: Dritter Wechselventilanschluss
- 20: Zweiter Bremsaktuator
- 22: Erster Abzweigpunkt
- 24: Zweiter Abzweigpunkt
- 26: Zweites Wechselventil
- 26.1: Erster Wechselventilanschluss
- 26.2: Zweiter Wechselventilanschluss
- 26.3: Dritter Wechselventilanschluss
- 28: Zweiter Druckluftvorrat
- 30: Vorrat-Wechselventil
- 32: Erste Diagnoseeinheit
- 33: Erstes Diagnoseventil
- 34: Zweite Diagnoseeinheit
- 35: Zweites Diagnoseventil
- 36: Bremsaktuator-Schutzeinheit
- 36.1: Erster Schutzeinheitanschluss
- 36.2: Zweiter Schutzeinheitanschluss
- 36.3: Dritter Schutzeinheitanschluss
- 40: Ventilkörper
- 42: Arbeitskammer
- 44: Ventilelement
- 46: Erster Ventilsitz
- 47: Zweiter Ventilsitz
- 48: Erster gedrosselter Bypass
- 49: Zweiter gedrosselter Bypass
- 50: Erstes pneumatisch schaltbares Ventil
- 50.1: Erster Schaltventilanschluss
- 50.2: Zweiter Schaltventilanschluss
- 50.3: Erster Steueranschluss
- 50.4: Zweiter Steueranschluss
- 51: Erste Drossel
- 52: Zweites pneumatisch schaltbares Ventil
- 52.1: Dritter Schaltventilanschluss
- 52.2: Vierter Schaltventilanschluss
- 52.3: Dritter Steueranschluss
- 52.4: Vierter Steueranschluss
- 53: Zweite Drossel
- 54: Erste Steuerleitung
- 55: Zweite Steuerleitung
- 56: Dritte Steuerleitung
- 57: Vierte Steuerleitung
- 58: Erste Feder
- 59: Zweite Feder
- 60: Dritte Drossel
- 62: Vergrößertes Volumen
- 100: Nutzfahrzeug
- 102: Elektronisch steuerbares pneumatisches Bremssystem
- 104: Vorderachsmodulator
- 106: Hinterachsmodulator (Zentralmodul)
- 108: Parkbremsmodulator
- 110.1: Erster Betriebsbremsaktuator
- 110.2: Zweiter Betriebsbremsaktuator
- 112.1: Erster Betriebsbrems- und Federspeicheraktuator
- 112.2: Zweiter Betriebsbrems- und Federspeicheraktuator
- VA: Vorderachse
- HA: Hinterachse
- pB: Bremsdruck
- pB1: Erster Bremsdruck
- pB2: Zweiter Bremsdruck
- pS1: Erster Steuerdruck
- pS2: Zweiter Steuerdruck
- pS3: Dritter Steuerdruck
- pS4: Vierter Steuerdruck
- pV: Vorratsdruck
- SB: Bremssignal
- SD1: Erstes Diagnosesignal
- SD2: Zweites Diagnosesignal

## Patentansprüche

1. Elektropneumatische Einrichtung (1) für ein elektronisch steuerbares pneumatisches Bremssystem, umfassend
einen Druckluftvorrat (4) zum Bereitstellen eines Vorratsdrucks (pV);
einen elektropneumatischen Bremsdruckmodulator (2), der Vorratsdruck (pV) von dem Druckluftvorrat (4) empfängt und in Abhängigkeit von elektronischen Bremsanforderungssignalen (SB) einen Bremsdruck (pB) an einem Bremsdruckanschluss (6) aussteuert;
**gekennzeichnet durch**
eine Schutzventileinheit (10) mit einem Schutzventileinlass (10.1), einem ersten Schutzventilauslass (10.2) und einem zweiten Schutzventilauslass (10.3), wobei der Schutzventileinlass (10.1) mit dem Bremsdruckanschluss (6) des Bremsdruckmodulators (4) verbunden ist, den Bremsdruck (pB) empfängt und diesen an den ersten und zweiten Schutzventilauslässen (10.2, 10.3) bereitstellen kann;
eine ersten Bremsdruckleitung (12), die mit dem ersten Schutzventilauslass (10.2) verbunden ist, und eine zweiten Bremsdruckleitung (14), die mit dem zweiten Schutzventilauslass (10.3) verbunden ist; und
wenigstens einen Bremsaktuator (16), der mit der ersten und zweiten Bremsdruckleitung (12, 14) zum Empfang des Bremsdrucks (pB) verbunden ist,
wobei die Schutzventileinheit (10) dazu eingerichtet ist, bei einer Leckage der ersten Bremsdruckleitung (12) die Bremsdruckaussteuerung am ersten Schutzventilauslass (10.2) zu drosseln oder zu verhindern, und bei einer Leckage der zweiten Bremsdruckleitung (14) die Bremsdruckaussteuerung am zweiten Schutzventilauslass (10.3) zu drosseln oder zu verhindern.

2. Elektropneumatische Einrichtung nach Anspruch 1, ferner aufweisend ein Wechselventil (18), welches einerseits mit den ersten und zweiten Bremsdruckleitungen (12, 14) und andererseits mit dem Bremsdruckaktuator (2) verbunden ist.

3. Elektropneumatische Einrichtung nach einem der vorstehenden Ansprüche, wobei die Schutzventileinheit (10) direkt an dem Bremsdruckmodulator (2) angeordnet oder mit diesem integriert ist.

4. Elektropneumatische Einrichtung nach einem der vorstehenden Ansprüche, aufweisend einen zweiten Bremsaktuator (20), der mit der ersten und zweiten Bremsdruckleitung (12, 14) zum Empfang des Bremsdrucks (pB) verbunden ist, wobei zwischen dem zweiten Bremsdruckaktuator (20) und den ersten und zweiten Bremsdruckleitungen (12, 14) ein zweites Wechselventil (26) angeordnet ist.

5. Elektropneumatische Einrichtung nach einem der vorstehenden Ansprüche, aufweisend einen zweiten Druckluftvorrat (28), der mit dem Bremsdruckmodulator (2) verbunden ist und an diesem einen zweiten Vorratsdruck (pV) bereitstellt.

6. Elektropneumatische Einrichtung nach einem der vorstehenden Ansprüche, aufweisend eine erste Diagnoseeinheit (32) zum Ermitteln einer Leckage der ersten Bremsdruckleitung (12) und eine zweite Diagnoseeinheit (34) zum Ermitteln einer Leckage der zweiten Bremsdruckleitung (14), wobei die ersten und zweiten Diagnoseeinheiten (32, 34) mit derselben elektronischen Steuereinheit verbunden sind.

7. Elektropneumatische Einrichtung nach einem der vorstehenden Ansprüche, eine Bremsaktuator-Schutzeinheit (36), welche einerseits mit den ersten und zweiten Bremsdruckleitungen (12, 14) und andererseits mit dem Bremsdruckaktuator (2) verbunden ist.

8. Elektropneumatische Einrichtung nach einem der vorstehenden Ansprüche, wobei die Schutzventileinheit (10) einen Ventilkörper (40) aufweist, der den Schutzventileinlass (10.1), den ersten Schutzventilauslass (10.2) und den zweiten Schutzventilauslass (10.3) aufweist, eine Arbeitskammer (42), in der ein Ventilelement (44) beweglich zwischen dem ersten und dem zweiten Schutzventilauslass (10.2, 10.3) angeordnet ist und in einer ersten Endlage gegen einen ersten dem ersten Schutzventilauslass (10.2) zugeordneten Ventilsitz (46) anliegt und in einer zweiten Endlage gegen einen zweiten dem zweiten Schutzventilauslass (10.3) zugeordneten Ventilsitz (47) anliegt, wobei die Schutzventileinheit (10) ferner einen ersten gedrosselten Bypass (48) aufweist, der den Schutzventileinlass (10.1) mit dem ersten Schutzventilauslass (10.2) verbindet und einen zweiten gedrosselten Bypass (49) aufweist, der den Schutzventileinlass (10.1) mit dem zweiten Schutzventilauslass (10.3) verbindet.

9. Elektropneumatische Einrichtung nach einem der vorstehenden Ansprüche, wobei die Schutzventileinheit (10) ein erstes pneumatisch schaltbares Ventil (50) und ein zweites pneumatisch schaltbares Ventil (52) aufweist, wobei das erste pneumatisch schaltbare Ventil (50) der ersten Bremsdruckleitung (12) und das zweite pneumatisch schaltbare Ventil (52) der zweiten Bremsdruckleitung (14) zugeordnet ist, und wobei das erste pneumatisch schaltbare Ventil (50) bei einer Leckage der ersten Bremsdruckleitung (12) die Bremsdruckaussteuerung am ersten Schutzventilauslass (10.2) drosselt oder sperrt, und das zweite pneumatisch schaltbare Ventil (52) bei einer Leckage der zweiten Bremsdruckleitung (14) die Bremsdruckaussteuerung am zweiten Schutzventilauslass (10.3) drosselt oder sperrt.

10. Elektropneumatische Einrichtung nach Anspruch 9, wobei
das erste pneumatisch schaltbare Ventil (50) eine erste Schaltstellung, eine zweite Schaltstellung, einen ersten Steueranschluss (10.3) und einen zweiten Steueranschluss (10.4) aufweist, wobei das erste pneumatisch schaltbare Ventil (50) bei Aussteuern eines ersten Steuerdrucks (pS1) am ersten Steueranschluss (10.3) in die erste Schaltstellung belastet ist und bei Aussteuern eines zweiten Steuerdrucks (pS2) am zweiten Steueranschluss (50.4) in die zweite Schaltstellung belastet wird, und
das zweite pneumatisch schaltbare Ventil (52) eine dritte Schaltstellung, eine vierte Schaltstellung, einen dritten Steueranschluss (52.3) und einen vierten Steueranschluss (52.4) aufweist, wobei das zweite pneumatisch schaltbare Ventil (52) bei Aussteuern eines dritten Steuerdrucks (pS3) am dritten Steueranschluss (52.3) in die dritte Schaltstellung belastet ist und bei Aussteuern eines vierten Steuerdrucks (pS4) am vierten Steueranschluss (52.4) in die zweite Schaltstellung belastet wird.

11. Elektropneumatische Einrichtung nach Anspruch 10, wobei der erste Steuerdruck (pS1) dem ersten Bremsdruck (pB1) oder einem von diesem abgeleiteten Druck, und der dritte Steuerdruck (pS3) dem zweiten Bremsdruck (pB2) oder einem von diesem abgeleiteten Druck entspricht.

12. Elektropneumatische Einrichtung nach Anspruch 10 oder 11, wobei der zweite Steuerdruck (pS2) dem zweiten Bremsdruck (pB2) oder einem von diesem abgeleiteten Druck und der vierte Steuerdruck (pB4) dem ersten Bremsdruck (pB1) oder einem von diesem abgeleiteten Druck entsprechen, oder wobei der zweite und vierte Steuerdruck (pS2, pS4) einem an dem Schutzventileinlass (10.1) anliegenden oder von diesem abgeleiteten Druck (pB) entspricht.

13. Elektropneumatische Einrichtung nach einem der Ansprüche 9 bis 12, wobei die ersten und zweiten pneumatisch schaltbaren Ventile (50, 52) in eine offene, nicht gedrosselte Schaltstellung federbelastet vorgespannt sind.

14. Elektropneumatische Einrichtung nach Anspruch 12, wobei zwischen den Schutzventileinlass (10.1) und den zweiten und/oder vierten Steueranschluss (50.4, 52.4) eine Drossel (60) und/oder ein vergrößertes Steuervolumen (62) ausgebildet ist.

15. Elektropneumatische Einrichtung nach einem der vorstehenden Ansprüche, wobei der Bremsdruckmodulator (2) ein Achsmodulator (104, 106) und der wenigstens eine Bremsaktuator (16) ein Betriebsbremsaktuator (110.1, 110.2) ist, oder wobei der Bremsdruckmodulator (2) ein Parkbremsmodulator (108) und der wenigstens eine Bremsaktuator (16) ein Federspeicheraktuator (112.1, 112.2) ist.

16. Verfahren zum rohrbruchsicheren Aussteuern eines Bremsdrucks (pB) in einem elektronisch steuerbaren pneumatischen Bremssystem (102), mit den Schritten:
- Empfangen eines elektronischen Bremsanforderungssignals (SB) an einem elektropneumatischen Bremsdruckmodulator (2);
- Aussteuern eines Bremsdrucks (pB) mittels des Bremsdruckmodulators (2);
- Empfangen des Bremsdrucks (pB) an einer Schutzventileinheit (10);
- Aussteuern des Bremsdrucks (pB, pB1, pB2) mittels der Schutzventileinheit (10) in eine erste Bremsdruckleitung (12) und eine zweite Bremsdruckleitung (14), die einen Bremsaktuator (2) redundant mit der Schutzventileinheit (10) verbinden;
wobei die Schutzventileinheit (10) bei Ermitteln einer Leckage der ersten Bremsdruckleitung (12) die Aussteuerung des Bremsdrucks (pB, pB1) in die erste Bremsdruckleitung (12) drosselt oder verhindert und bei Ermitteln einer Leckage der zweiten Bremsdruckleitung (14) die Aussteuerung des Bremsdrucks (pB, pB2) in die zweite Bremsdruckleitung (14) drosselt oder verhindert.

17. Nutzfahrzeug (100) mit einem elektronisch steuerbaren pneumatischen Bremssystem (102), das eine elektropneumatische Einrichtung (1) nach einem der Ansprüche 1 bis 15 umfasst.

## Claims

1. Electropneumatic device (1) for an electronically controllable pneumatic brake system, comprising
a compressed air supply (4) for providing a supply pressure (pV);
an electropneumatic brake pressure modulator (2) which receives supply pressure (pV) from the compressed air supply (4) and controls a brake pressure (pB) at a brake pressure connection (6) on the basis of electronic brake request signals (SB);
**characterized by**
a protection valve unit (10) having a protection valve inlet (10.1), a first protection valve outlet (10.2) and a second protection valve outlet (10.3), the protection valve inlet (10.1) being connected to the brake pressure connection (6) of the brake pressure modulator (4), receiving the brake pressure (pB) and being able to provide it to the first and second protection valve outlets (10.2, 10.3);
a first brake pressure line (12) connected to the first protection valve outlet (10.2) and a second brake pressure line (14) connected to the second protection valve outlet (10.3); and
at least one brake actuator (16) connected to the first and second brake pressure lines (12, 14) for receiving the brake pressure (pB),
the protection valve unit (10) being designed to throttle or prevent the brake pressure control at the first protection valve outlet (10.2) in the event of a leak in the first brake pressure line (12), and to throttle or prevent the brake pressure control at the second protection valve outlet (10.3) in the event of a leak in the second brake pressure line (14).

2. Electropneumatic device according to claim 1, further comprising a shuttle valve (18) which is connected on the one hand to the first and second brake pressure lines (12, 14) and on the other hand to the brake pressure actuator (2).

3. Electropneumatic device according to either of the preceding claims, wherein the protection valve unit (10) is arranged directly on the brake pressure modulator (2) or is integrated therewith.

4. Electropneumatic device according to any of the preceding claims, comprising a second brake actuator (20) which is connected to the first and second brake pressure lines (12, 14) for receiving the brake pressure (pB), wherein a second shuttle valve (26) is arranged between the second brake pressure actuator (20) and the first and second brake pressure lines (12, 14).

5. Electropneumatic device according to any of the preceding claims, comprising a second compressed air supply (28) which is connected to the brake pressure modulator (2) and provides a second supply pressure (pV) thereto.

6. Electropneumatic device according to any of the preceding claims, comprising a first diagnostic unit (32) for determining a leak in the first brake pressure line (12) and a second diagnostic unit (34) for determining a leak in the second brake pressure line (14), wherein the first and second diagnostic units (32, 34) are connected to the same electronic control unit.

7. Electropneumatic device according to any of the preceding claims, a brake actuator protection unit (36) which is connected on the one hand to the first and second brake pressure lines (12, 14) and on the other hand to the brake pressure actuator (2).

8. Electropneumatic device according to any of the preceding claims, wherein the protection valve unit (10) has a valve body (40) which has the protection valve inlet (10.1), the first protection valve outlet (10.2) and the second protection valve outlet (10.3), a working chamber (42) in which a valve element (44) is movably arranged between the first and the second protection valve outlet (10.2, 10.3) and in a first end position rests against a first valve seat (46) associated with the first protection valve outlet (10.2) and in a second end position rests against a second valve seat (47) associated with the second protection valve outlet (10.3), wherein the protection valve unit (10) further has a first throttled bypass (48) which connects the protection valve inlet (10.1) to the first protection valve outlet (10.2) and has a second throttled bypass (49) which connects the protection valve inlet (10.1) to the second protection valve outlet (10.3).

9. Electropneumatic device according to any of the preceding claims, wherein the protection valve unit (10) has a first pneumatically switchable valve (50) and a second pneumatically switchable valve (52), wherein the first pneumatically switchable valve (50) is associated with the first brake pressure line (12) and the second pneumatically switchable valve (52) is associated with the second brake pressure line (14), and wherein the first pneumatically switchable valve (50) throttles or blocks the brake pressure control at the first protection valve outlet (10.2) in the event of a leak in the first brake pressure line (12), and the second pneumatically switchable valve (52) throttles or blocks the brake pressure control at the second protection valve outlet (10.3) in the event of a leak in the second brake pressure line (14).

10. Electropneumatic device according to claim 9, wherein
the first pneumatically switchable valve (50) has a first switching position, a second switching position, a first control connection (10.3) and a second control connection (10.4), wherein the first pneumatically switchable valve (50) is loaded into the first switching position when a first control pressure (pS1) is controlled at the first control connection (10.3) and is loaded into the second switching position when a second control pressure (pS2) is controlled at the second control connection (50.4), and
the second pneumatically switchable valve (52) has a third switching position, a fourth switching position, a third control connection (52.3) and a fourth control connection (52.4), wherein the second pneumatically switchable valve (52) is loaded into the third switching position when a third control pressure (pS3) is controlled at the third control connection (52.3) and is loaded into the second switching position when a fourth control pressure (pS4) is controlled at the fourth control connection (52.4).

11. Electropneumatic device according to claim 10, wherein the first control pressure (pS1) corresponds to the first brake pressure (pB1) or a pressure derived therefrom, and the third control pressure (pS3) corresponds to the second brake pressure (pB2) or a pressure derived therefrom.

12. Electropneumatic device according to claim 10 or 11, wherein the second control pressure (pS2) corresponds to the second brake pressure (pB2) or a pressure derived therefrom and the fourth control pressure (pB4) corresponds to the first brake pressure (pB1) or a pressure derived therefrom, or wherein the second and fourth control pressures (pS2, pS4) correspond to a pressure (pB) present at the protection valve inlet (10.1) or derived therefrom.

13. Electropneumatic device according to any of claims 9 to 12, wherein the first and second pneumatically switchable valves (50, 52) are spring-preloaded into an open, non-throttled switching position.

14. Electropneumatic device according to claim 12, wherein a throttle (60) and/or an enlarged control volume (62) is formed between the protection valve inlet (10.1) and the second and/or fourth control connection (50.4, 52.4).

15. Electropneumatic device according to any of the preceding claims, wherein the brake pressure modulator (2) is an axle modulator (104, 106) and the at least one brake actuator (16) is a service brake actuator (110.1, 110.2), or wherein the brake pressure modulator (2) is a parking brake modulator (108) and the at least one brake actuator (16) is a spring-loaded actuator (112.1, 112.2).

16. Method for pipe-rupture-proof control of a brake pressure (pB) in an electronically controllable pneumatic brake system (102), comprising the following steps:
- Receiving an electronic brake request signal (SB) at an electropneumatic brake pressure modulator (2);
- Controlling a brake pressure (pB) by means of the brake pressure modulator (2);
- Receiving the brake pressure (pB) at a protection valve unit (10);
- Controlling the brake pressure (pB, pB1, pB2) by means of the protection valve unit (10) into a first brake pressure line (12) and a second brake pressure line (14), which redundantly connect a brake actuator (2) to the protection valve unit (10);
wherein the protection valve unit (10) throttles or prevents the control of the brake pressure (pB, pB1) in the first brake pressure line (12) upon detection of a leak in the first brake pressure line (12) and throttles or prevents the control of the brake pressure (pB, pB2) in the second brake pressure line (14) upon detection of a leak in the second brake pressure line (14).

17. Commercial vehicle (100) comprising an electronically controllable pneumatic brake system (102) comprising an electropneumatic device (1) according to any of claims 1 to 15.

## Revendications

1. Dispositif électropneumatique (1) pour un système de freinage pneumatique à commande électronique, comprenant
une réserve d'air comprimé (4) destinée à fournir une pression de réserve (pV) ;
un modulateur de pression de freinage électropneumatique (2) qui reçoit la pression de réserve (pV) de la réserve d'air comprimé (4) et qui commande une pression de freinage (pB) au niveau d'un raccord de pression de freinage (6) en fonction de signaux électroniques de demande de freinage (SB) ;
**caractérisé par**
une unité de soupape de protection (10) comportant une entrée de soupape de protection (10.1), une première sortie de soupape de protection (10.2) et une seconde sortie de soupape de protection (10.3), dans lequel l'entrée de soupape de protection (10.1) est reliée au raccord de pression de freinage (6) du modulateur de pression de freinage (4), reçoit la pression de freinage (pB) et peut fournir celle-ci aux première et seconde sorties de soupape de protection (10.2, 10.3) ;
une première conduite de pression de freinage (12) qui est reliée à la première sortie de soupape de protection (10.2) et une seconde conduite de pression de freinage (14) qui est reliée à la seconde sortie de soupape de protection (10.3) ; et
au moins un actionneur de freinage (16) qui est relié aux première et seconde conduites de pression de freinage (12, 14) pour la réception de la pression de freinage (pB),
dans lequel l'unité de soupape de protection (10) est conçue pour, en cas de fuite de la première conduite de pression de freinage (12), étrangler ou empêcher le débit de pression de freinage à la première sortie de soupape de protection (10.2), et pour, en cas de fuite de la seconde conduite de pression de freinage (14), étrangler ou empêcher le débit de pression de freinage à la seconde sortie de soupape de protection (10.3).

2. Dispositif électropneumatique selon la revendication 1, présentant en outre une soupape de changement (18) qui est reliée d'une part aux première et seconde conduites de pression de freinage (12, 14) et d'autre part à l'actionneur de pression de freinage (2).

3. Dispositif électropneumatique selon l'une des revendications précédentes, dans lequel l'unité de soupape de protection (10) est disposée directement sur le modulateur de pression de freinage (2) ou est intégrée avec celui-ci.

4. Dispositif électropneumatique selon l'une des revendications précédentes, comprenant un second actionneur de freinage (20) qui est relié aux première et seconde conduites de pression de freinage (12, 14) pour la réception de la pression de freinage (pB), dans lequel une seconde soupape de changement (26) est disposée entre le second actionneur de pression de freinage (20) et les première et seconde conduites de pression de freinage (12, 14).

5. Dispositif électropneumatique selon l'une des revendications précédentes, présentant une seconde réserve d'air comprimé (28) qui est reliée au modulateur de pression de freinage (2) et fournit à celui-ci une seconde pression de réserve (pV).

6. Dispositif électropneumatique selon l'une des revendications précédentes, présentant une première unité de diagnostic (32) pour la détection d'une fuite de la première conduite de pression de freinage (12) et une seconde unité de diagnostic (34) pour la détection d'une fuite de la seconde conduite de pression de freinage (14), dans lequel les première et seconde unités de diagnostic (32, 34) sont reliées à la même unité de commande électronique.

7. Dispositif électropneumatique selon l'une des revendications précédentes, une unité de protection d'actionneur de freinage (36) qui est reliée d'une part aux première et seconde conduites de pression de freinage (12, 14) et d'autre part à l'actionneur de pression de freinage (2).

8. Dispositif électropneumatique selon l'une des revendications précédentes, dans lequel l'unité de soupape de protection (10) présente un corps de soupape (40) qui présente l'entrée de soupape de protection (10.1), la première sortie de soupape de protection (10.2) et la seconde sortie de soupape de protection (10.3), une chambre de travail (42) dans laquelle un élément de soupape (44) est disposé de manière mobile entre la première et la seconde sortie de soupape de protection (10.2, 10.3) et est placé, dans une première position d'extrémité, contre un premier siège de soupape (46) associé à la première sortie de soupape de protection (10.2) et, dans une seconde position d'extrémité, contre un second siège de soupape (47) associé à la seconde sortie de soupape de protection (10.3), dans lequel l'unité de soupape de protection (10) présente en outre une première dérivation étranglée (48) qui relie l'entrée de soupape de protection (10.1) à la première sortie de soupape de protection (10.2) et une seconde dérivation étranglée (49) qui relie l'entrée de soupape de protection (10.1) à la seconde sortie de soupape de protection (10.3).

9. Dispositif électropneumatique selon l'une des revendications précédentes, dans lequel l'unité de soupape de protection (10) présente une première soupape à commutation pneumatique (50) et une seconde soupape à commutation pneumatique (52), dans lequel la première soupape à commutation pneumatique (50) est associée à la première conduite de pression de freinage (12) et la seconde soupape à commutation pneumatique (52) est associée à la seconde conduite de pression de freinage (14), et dans lequel la première soupape à commutation pneumatique (50), en cas de fuite de la première conduite de pression de freinage (12), étrangle ou bloque le débit de pression de freinage à la première sortie de soupape de protection (10.2), et la seconde soupape à commande pneumatique (52), en cas de fuite de la seconde conduite de pression de freinage (14) étrangle ou bloque le débit de pression de freinage à la seconde sortie de soupape de protection (10.3).

10. Dispositif électropneumatique selon la revendication 9, dans lequel
la première soupape à commutation pneumatique (50) présente une première position de commutation, une deuxième position de commutation, un premier raccord de commande (10.3) et un deuxième raccord de commande (10.4), dans lequel la première soupape à commutation pneumatique (50) est sollicitée dans la première position de commutation lors de la commande d'une première pression de commande (pS1) au niveau du premier raccord de commande (10.3) et est sollicitée dans la deuxième position de commutation lors de la commande d'une deuxième pression de commande (pS2) au niveau du deuxième raccord de commande (50.4), et
la seconde soupape à commutation pneumatique (52) présente une troisième position de commutation, une quatrième position de commutation, un troisième raccord de commande (52.3) et un quatrième raccord de commande (52.4), dans lequel la seconde soupape à commutation pneumatique (52) est sollicitée dans la troisième position de commutation lors de la commande d'une troisième pression de commande (pS3) au niveau du troisième raccord de commande (52.3) et est sollicitée dans la deuxième position de commutation lors de la commande d'une quatrième pression de commande (pS4) au niveau du quatrième raccord de commande (52.4).

11. Dispositif électropneumatique selon la revendication 10, dans lequel la première pression de commande (pS1) correspond à la première pression de freinage (pB1) ou à une pression dérivée de celle-ci, et la troisième pression de commande (pS3) correspond à la seconde pression de freinage (pB2) ou à une pression dérivée de celle-ci.

12. Dispositif électropneumatique selon la revendication 10 ou 11, dans lequel la deuxième pression de commande (pS2) correspond à la seconde pression de freinage (pB2) ou à une pression dérivée de celle-ci et la quatrième pression de commande (pB4) correspond à la première pression de freinage (pB1) ou à une pression dérivée de celle-ci, ou dans lequel les deuxième et quatrième pressions de commande (pS2, pS4) correspondent à une pression (pB) appliquée à l'entrée de soupape de protection (10.1) ou dérivée de celle-ci.

13. Dispositif électropneumatique selon l'une des revendications 9 à 12, dans lequel les première et seconde soupapes à commutation pneumatique (50, 52) sont précontraintes par ressort dans une position de commutation ouverte et non étranglée.

14. Dispositif électropneumatique selon la revendication 12, dans lequel un étranglement (60) et/ou un volume de commande agrandi (62) est conçu entre l'entrée de la soupape de protection (10.1) et le deuxième et/ou le quatrième raccord de commande (50.4, 52.4).

15. Dispositif électropneumatique selon l'une des revendications précédentes, dans lequel le modulateur de pression de freinage (2) est un modulateur d'essieu (104, 106) et l'au moins un actionneur de freinage (16) est un actionneur de freinage de service (110.1, 110.2), ou dans lequel le modulateur de pression de freinage (2) est un modulateur de freinage de stationnement (108) et l'au moins un actionneur de freinage (16) est un actionneur à ressort (112.1, 112.2).

16. Procédé pour la commande sans risque de rupture de tuyau d'une pression de freinage (pB) dans un système de freinage pneumatique (102) à commande électronique, comportant les étapes consistant à :
- la réception d'un signal électronique de demande de freinage (SB) au niveau d'un modulateur électropneumatique de pression de freinage (2) ;
- la commande d'une pression de freinage (pB) à l'aide du modulateur de pression de freinage (2) ;
- la réception de la pression de freinage (pB) au niveau d'une unité de soupape de protection (10) ;
- la commande de la pression de freinage (pB, pB1, pB2) à l'aide de l'unité de soupape de protection (10) dans une première conduite de pression de freinage (12) et une seconde conduite de pression de freinage (14), qui relient de manière redondante un actionneur de freinage (2) à l'unité de soupape de protection (10) ;
dans lequel l'unité de soupape de protection (10) étrangle ou empêche la commande de la pression de freinage (pB, pB1) dans la première conduite de pression de freinage (12) lorsqu'une fuite de la première conduite de pression de freinage (12) est détectée et étrangle ou empêche la commande de la pression de freinage (pB, pB2) dans la seconde conduite de pression de freinage (14) lorsqu'une fuite de la seconde conduite de pression de freinage (14) est détectée.

17. Véhicule utilitaire (100) comportant un système de freinage pneumatique (102) à commande électronique qui comprend un dispositif électropneumatique (1) selon l'une des revendications 1 à 15.
